(19) Europäisches Patentamt / European Patent Office / Office européen des brevets

(11) **EP 3 845 424 A1**

(12) **EUROPEAN PATENT APPLICATION**
published in accordance with Art. 153(4) EPC

(43) Date of publication:
**07.07.2021 Bulletin 2021/27**

(21) Application number: **19854407.4**

(22) Date of filing: **07.03.2019**

(51) Int Cl.:
**B60W 30/06** (2006.01)  **B60R 99/00** (2009.01)
**G01C 21/28** (2006.01)  **G08G 1/16** (2006.01)

(86) International application number:
**PCT/JP2019/009071**

(87) International publication number:
**WO 2020/044619 (05.03.2020 Gazette 2020/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **29.08.2018 JP 2018160024**

(71) Applicant: **Faurecia Clarion Electronics Co., Ltd. Saitama-shi, Saitama 330-0081 (JP)**

(72) Inventors:
• **TAGAWA, Shinya**
**Saitama-shi, Saitama 330-0081 (JP)**
• **SAKANO, Morihiko**
**Tokyo 100-8280 (JP)**

(74) Representative: **Lavoix**
**Bayerstraße 83**
**80335 München (DE)**

(54) **VEHICLE-MOUNTED PROCESSING DEVICE**

(57)     An in-vehicle processing apparatus includes: a storage unit configured to store point group data, which is created based on output of a sensor for acquiring information about surroundings of a vehicle, including an environmental condition which is a condition for an ambient environment when the output of the sensor is acquired, and including a plurality of coordinates of points indicating parts of objects in a first coordinate system; a sensor input unit configured to acquire the output of the sensor; a current environment acquisition unit configured to acquire the environmental condition; a movement information acquisition unit configured to acquire information about movements of the vehicle; a local peripheral information creation unit configured to generate local peripheral information including a position of the vehicle in a second coordinate system and a plurality of coordinates of points indicating parts of objects in the second coordinate system on the basis of the information acquired by the sensor input unit and the movement information acquisition unit; and a position estimation unit configured to estimate a relationship between the first coordinate system and the second coordinate system on the basis of the point group data, the local peripheral information, the environmental condition included in the point group data, and the environmental condition acquired by the current environment acquisition unit and estimate the position of the vehicle in the first coordinate system.

FIG.1

EP 3 845 424 A1

## Description

TECHNICAL FIELD

The present invention relates to an in-vehicle processing apparatus.

BACKGROUND ART

In recent years, developments have been highly active in order to realize automatic driving of automobiles. Automatic driving is autonomous driving of a vehicle without being operated by a user by sensing the surroundings of the vehicle with external sensors such as cameras, ultrasonic wave radars, and radars and making judgments based on the sensing results. This automatic driving requires estimation of the position of the vehicle.

PTL 1 discloses an in-vehicle processing apparatus including: a storage unit that stores point group data including a plurality of coordinates of points indicating parts of objects in a first coordinate system; a sensor input unit that acquires output from a sensor for acquiring information of the surroundings of the vehicle; a movement information acquisition unit that acquires information about movements of the vehicle; a local peripheral information creation unit that generates local peripheral information including a position of the vehicle in a second coordinate system and a plurality of coordinates of points indicating parts of objects in the second coordinate system on the basis of the information acquired by the sensor input unit and the movement information acquisition unit; and a position estimation unit that estimates a relationship between the first coordinate system and the second coordinate system on the basis of the point group data and the local peripheral information and estimates the position of the vehicle in the first coordinate system.

CITATION LIST

PATENT LITERATURE

PTL 1: Japanese Patent Application Laid-Open (Kokai) Publication No. 2018-4343

SUMMARY OF THE INVENTION

PROBLEMS TO BE SOLVED BY THE INVENTION

PTL 1 does not give any consideration to changes in accuracy of the sensor(s), which may be caused by environmental conditions.

MEANS TO SOLVE THE PROBLEMS

According to a first embodiment of the present invention, an in-vehicle processing apparatus includes: a storage unit configured to store point group data, which is created based on output of a sensor for acquiring information about surroundings of a vehicle, including an environmental condition which is a condition for an ambient environment when the output of the sensor is acquired, and including a plurality of coordinates of points indicating parts of objects in a first coordinate system; a sensor input unit configured to acquire the output of the sensor; a current environment acquisition unit configured to acquire the environmental condition; a movement information acquisition unit configured to acquire information about movements of the vehicle; a local peripheral information creation unit configured to generate local peripheral information including a position of the vehicle in a second coordinate system and a plurality of coordinates of points indicating parts of objects in the second coordinate system on the basis of the information acquired by the sensor input unit and the movement information acquisition unit; and a position estimation unit configured to estimate a relationship between the first coordinate system and the second coordinate system on the basis of the point group data, the local peripheral information, the environmental condition included in the point group data, and the environmental condition acquired by the current environment acquisition unit and estimate the position of the vehicle in the first coordinate system.

ADVANTAGEOUS EFFECTS OF THE INVENTION

According to the present invention, the in-vehicle processing apparatus can perform the position estimation which is resistant to disturbances, by giving consideration to changes in the accuracy of the sensor which may be caused by the environmental conditions.

BRIEF DESCRIPTION OF DRAWINGS

[Fig. 1] Fig. 1 is a configuration diagram of an automatic parking system 100;
[Fig. 2] Fig. 2 is a diagram illustrating an example of a parking facility point group 124A according to a first embodiment;
[Fig. 3] Fig. 3 is a diagram illustrating an example of an environment correspondence table 124B according to the first embodiment;
[Fig. 4] Fig. 4 is a flowchart illustrating the operation of a recording phase of an in-vehicle processing apparatus 120;
[Fig. 5] Fig. 5 is a flowchart illustrating the entire operation of an automatic parking phase of the in-vehicle processing apparatus 120;
[Fig. 6] Fig. 6 is a flowchart illustrating self-position estimation processing of the automatic parking phase;
[Fig. 7] Fig. 7 is a flowchart illustrating matching processing of the automatic parking phase;
[Fig. 8] Fig. 8 is a flowchart illustrating automatic parking processing of the automatic parking phase;

[Fig. 9] Fig. 9(a) is a plan view illustrating an example of a parking facility 901 and Fig. 9(b) is a diagram in which point groups of landmarks saved in a RAM 122 are visualized;

[Fig. 10] Fig. 10(a) is a diagram illustrating an example in which point group data of a parking facility point group 124A is visualized and Fig. 10(b) is a diagram illustrating an example in which a newly detected point group data is visualized;

[Fig. 11] Fig. 11 is a diagram illustrating a current position of a vehicle 1 in the parking facility 901;

[Fig. 12] Fig. 12 is a diagram illustrating data obtained by transforming point groups, which are extracted from an image captured at the position of the vehicle 1 as illustrated in Fig. 11, into parking facility coordinates;

[Fig. 13] Fig. 13 is a diagram illustrating a comparison between the parking facility point group 124A and local peripheral information 122B illustrated in Fig. 12 when the estimation of the position of the vehicle 1 in the parking facility coordinate system includes an error;

[Fig. 14] Figs. 14(a) to 14(c) are diagrams illustrating the relationship between the local peripheral information 122B illustrated in Fig. 13 and the parking facility point group 124A when the local peripheral information 122B is moved for integral multiples of the width of a parking frame;

[Fig. 15] Fig. 15 is a diagram illustrating an example of the parking facility point group 124A according to a second embodiment; and

[Fig. 16] Fig. 16 is a diagram illustrating an example of the environment correspondence table 124B according to the second embodiment.

DESCRIPTION OF EMBODIMENTS

(First Embodiment)

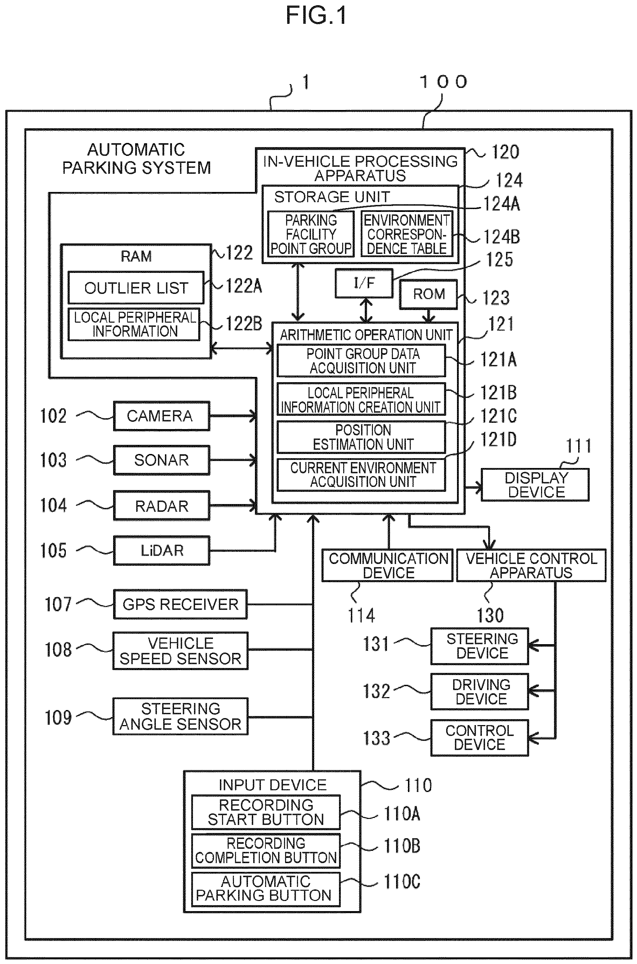

A first embodiment of an in-vehicle processing apparatus according to the present invention will be explained with reference to Fig. 1 to Fig. 14.

Fig. 1 is a configuration diagram of an automatic parking system 100 including the in-vehicle processing apparatus according to the present invention. The automatic parking system 100 is mounted in a vehicle 1. The automatic parking system 100 is configured of a sensor group 102 to 105 and 107 to 109, an input/output device group 110, 111, 114, a control device group 130 to 133 for controlling the vehicle 1, and the in-vehicle processing apparatus 120. The sensor group, the input/output device group, and the control device group are connected with the in-vehicle processing apparatus 120 via signal lines and transmit/receive various kinds of data to/from the in-vehicle processing apparatus 120.

The in-vehicle processing apparatus 120 includes an arithmetic operation unit 121, a RAM 122, a ROM 123, a storage unit 124, and an interface 125. The arithmetic operation unit 121 is a CPU. The in-vehicle processing apparatus 120 may be configured to have other arithmetic operation processing apparatuses such as FPGA to execute whole or part of arithmetic operation processing. The RAM 122 is a readable and writable storage area and operates as a main storage device for the in-vehicle processing apparatus 120. The RAM 122 stores an outlier list 122A described later and local peripheral information 122B described later. The ROM 123 is a read-only storage area and stores a program described later. This program is decompressed in the RAM 122 and executed by the arithmetic operation unit 121. The arithmetic operation unit 121 operates as a point group data acquisition unit 121A, a local peripheral information creation unit 121B, a position estimation unit 121C, and a current environment acquisition unit 121D by reading and executing the program.

The operations of the in-vehicle processing apparatus 120 as the current environment acquisition unit 121D are as described below. The current environment acquisition unit 121D acquires an atmospheric temperature at a current position of the vehicle 1 from a thermometer (which is not illustrated in the drawing) mounted in the vehicle 1 or a server (which is not illustrated in the drawing) via a communication device 114. Moreover, the current environment acquisition unit 121D acquires the weather at the current position of the vehicle 1 from the server (which is not illustrated in the drawing) via the communication device 114. Furthermore, the current environment acquisition unit 121D acquires current time of day by using a clock function with which the in-vehicle processing apparatus 120 is equipped. The operations of the in-vehicle processing apparatus 120 as the point group data acquisition unit 121A, the local peripheral information creation unit 121B, and the position estimation unit 121C will be described later.

The storage unit 124 is a nonvolatile storage device and operates as an auxiliary storage device for the in-vehicle processing apparatus 120. The storage unit 124 stores a parking facility point group 124A and an environment correspondence table 124B.

The parking facility point group 124A is one or a plurality of pieces of parking facility data. The parking facility data is a set of positional information of a certain parking facility, that is, the latitude and longitude of the parking facility, coordinates indicating parking areas, and coordinates of points constituting landmarks existing in that parking facility. The parking facility data is created by using outputs from the aforementioned sensor group 102 to 105 and 107 to 109. The parking facility data includes environmental conditions which are conditions for the ambient environment when the outputs of the sensor group 102 to 105 and 107 to 109 are acquired. Incidentally, the environmental conditions are, for example, the weather, the atmospheric temperature, and the time of day. Therefore, if the relevant parking facilities are the same parking facility, but have different environmental conditions, they are included as individual parking facility data in the parking facility point group 124A. The landmarks will be described later. The environment correspondence table 124B is a table indicating degradation of the accuracy of each sensor regarding each of the environmental conditions. The details will be explained later. The interface 125 transmits/ receives information to/from other equipment which constitutes the in-vehicle processing apparatus 120 and the automatic parking system 100.

The sensor group includes a camera 102, sonar 103, radar 104, and LiDAR 105 for capturing images of the surroundings of the vehicle 1, a GPS receiver 107 for measuring the position of the vehicle 1, a vehicle speed sensor 108 for measuring a speed of the vehicle 1, and a steering angle sensor 109 for measuring a steering angle of the vehicle 1. The camera 102 is a camera equipped with an image sensor. The sonar 103 is an ultrasonic wave sensor, emits ultrasonic waves to check whether they are reflected or not, and measures the distance to an obstacle from the time it takes to measure the reflected waves. The radar 104 emits radio waves to check whether they are reflected or not, and measures the distance to an obstacle the time it takes to measure the reflected waves. The difference between the sonar 103 and the radar 104 is the wavelength of the emitted electromagnetic waves and the radar 104 emits the waves of a shorter wavelength. The LiDAR 105 is a device which performs detection and distance measurement with light (Light Detection and Ranging).

Regarding the camera 102, noise increases in a rainy or snowy environment or in a dark environment such as in the early evening or at night. The sonar 103 measures the distance to be farther than the actual distance in a high-temperature environment and measures the distance to be shorter than the actual distance in a low-temperature environment. Specifically speaking, the accuracy of the camera 102 degrades in the rainy or snowy environment and in the dark environment such as in the early evening or at night and the accuracy of the sonar 103 degrades in the high-temperature or low-temperature environment.

The camera 102 outputs images obtained by photo shooting (hereinafter referred to as the "captured images") to the in-vehicle processing apparatus 120. The sonar 103, the radar 104, and the LiDAR 105 output information obtained by sensing to the in-vehicle processing apparatus 120. The in-vehicle processing apparatus 120 performs landmark positioning, which will be described later, by using the information output from the camera 102, the sonar 103, the radar 104, and the LiDAR 105. Internal parameters such as a focal distance and image sensor size of the camera 102, and external parameters such as the position to mount the camera 102 in the vehicle 1 and a mounting attitude of the camera 102 are known and saved in the ROM 123 in advance. The in-vehicle processing apparatus 120 can calculate a positional relationship between a subject and the camera 102 by using the internal parameters and the external parameters which are stored in the ROM 123. The positions to mount the sonar 103, the radar 104, and the LiDAR 105 in the vehicle 1 and their mounting attitudes are also known and saved in the ROM 123 in advance. The in-vehicle processing apparatus 120 can calculate a positional relationship between an obstacle detected by the sonar 103, the radar 104, and the LiDAR 105 and the vehicle 1.

The GPS receiver 107 receives signals from a plurality of satellites, which constitute a satellite navigation system, and calculates the position of the GPS receiver 107, that is, the latitude and the longitude of the GPS receiver 107 according to the arithmetic operation based on the received signals. Incidentally, the accuracy of the latitude and the longitude which are calculated by the GPS receiver 107 does not have to be highly accurate, but may include an error of, for example, several meters to approximately 10 m. The GPS receiver 107 outputs the calculated latitude and longitude to the in-vehicle processing apparatus 120.

The vehicle speed sensor 108 and the steering angle sensor 109 measure the vehicle speed and the steering angle of the vehicle 1, respectively, and output them to the in-vehicle processing apparatus 120. The in-vehicle processing apparatus 120 calculates the travel amount and the moving direction of the vehicle 1 according to the known dead reckoning technology by using the outputs from the vehicle speed sensor 108 and the steering angle sensor 109.

An operating command to the in-vehicle processing apparatus 120 by a user is input to the input device 110. The input device 110 includes a recording start button 110A, a recording completion button 110B, and an automatic parking button 110C. The display device 111 is, for example, a liquid crystal display and displays the information which is output from the in-vehicle processing apparatus 120. Incidentally, the input device 110 and the display device 111 may be integrated and configured as, for example, a liquid crystal display which is compatible with touch operation. In this case, as a specified area of the liquid crystal display is touched, it may be determined that the recording start button 110A, the recording completion button 110B, or the automatic parking button 110C is pressed.

The communication device 114 is used for external equipment of the vehicle 1 and the in-vehicle processing apparatus 120 to wirelessly transmit/receive information between them. For example, when the user is outside the vehicle 1, the communication device 114 communicates with a portable terminal, which the user is carrying, to transmit/receive the information. The target with which the communication device 114 communicates is not limited to the user's portable terminal.

The vehicle control apparatus 130 controls the steering device 131, the driving device 132, and the braking device 133 according to an operating command of the in-vehicle processing apparatus 120. The steering device 131 operates steering of the vehicle 1. The driving device 132 imparts a driving force to the vehicle 1. The driving device 132 increases the driving force of the vehicle 1 by, for example, increasing a target number of revolutions of an engine with which the vehicle 1 is equipped. The braking device 133 imparts a braking force to the vehicle 1.

(Landmark Positioning)

Landmarks are objects having features which can be identified by the sensor(s), and are, for example, parking frame lines which are one type of road surface paint, and walls for buildings which are obstacles to obstruct running of vehicles. In this embodiment, vehicles and humans that are mobile objects are not included in the landmarks. The in-vehicle processing apparatus 120 detects the landmarks which exist around the vehicle1, that is, points having features which can be identified by the sensors, on the basis of the information which is input from the camera 102. In the following explanation, the detection of the landmarks based on the information which is input from external sensors, that is, the camera 102, the sonar 103, the radar 104, and the LiDAR 105 will be hereinafter referred to as "landmark positioning."

The in-vehicle processing apparatus 120 detects, for example, road surface paint such as parking frames by causing an image recognition program to operate on an image(s) captured by the camera as a target(s) as described below. In order to detect the parking frames, the in-vehicle processing apparatus 120 firstly extracts edges from an input image by using a Sobel filter or the like. Next, for example, the in-vehicle processing apparatus 120 extracts a pair of an edge rise, which is a change from white to black, and an edge fall which is a change from black to white. Then, if the distance between this pair substantially matches a predetermined first specified distance, that is, the width of a while line constituting a parking frame, the in-vehicle processing apparatus 120 determines this pair as a candidate for the parking frame. When the in-vehicle processing apparatus 120 detects a plurality of candidates for parking frames by executing similar processing and if the distance between the candidates for the parking frames substantially matches the distance between white lines of the parking frame, it detects them as a parking frame. The road surface paint other than the parking frames is detected by the image recognition program which executes the following processing. Firstly, edges are extracted from the input image by using the Sobel filter or the like. Such edges can be detected by searching for pixels whose edge intensity is larger than a predetermined constant value and regarding which the distance between the edges is a predetermined distance corresponding to the width of the white line.

The in-vehicle processing apparatus 120 detects a landmark(s) by using the outputs of the sonar 103, the radar 104, and the LiDAR 105. Incidentally, if areas from which the camera 102, the sonar 103, the radar 104, and the LiDAR 105 can acquire the information overlap with each other, the same landmark is detected by the plurality of sensors. However, the information about the relevant landmark may sometimes be acquired from either one of the sensors because of properties of the sensors. When the in-vehicle processing apparatus 120 records the detected landmark, it also records which sensor's output was used to detect the relevant landmark.

The in-vehicle processing apparatus 120 detects vehicles and humans by means of, for example, known template matching and excludes them from the measurement results. Moreover, mobile objects detected as described below may be excluded from the measurement results. Specifically speaking, the in-vehicle processing apparatus 120 calculates the positional relationship between a subject and the camera 102 in the captured image by using the internal parameters and the external parameters. Next, the in-vehicle processing apparatus 120 calculates relative speeds of the vehicle 1 and the subject by tracking the subject in the captured images which are continuously acquired by the camera 102. Lastly, the in-vehicle processing apparatus 120 calculates the speed of the vehicle 1 by using the outputs of the vehicle speed sensor 108 and the steering angle sensor 109; and if the calculated speed of the vehicle 1 does not match the relative speed with respect to the subject, the in-vehicle processing apparatus 120 determines that the subject is a mobile object, and excludes the information about this mobile object from the measurement results.

(Parking Facility Point Group 124A)

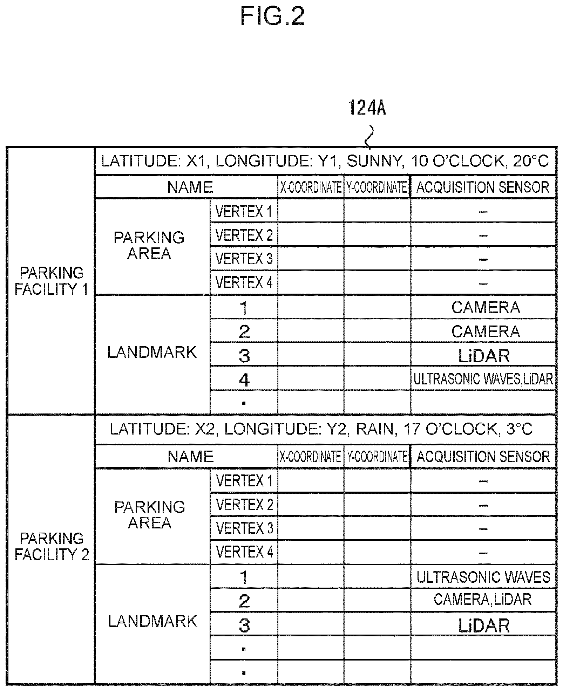

Fig. 2 is a diagram illustrating an example of a parking facility point group 124A stored in the storage unit 124. Fig. 2 shows the example in which two pieces of parking facility data are stored as the parking facility point group 124A. One piece of parking facility data is configured of the position of that parking facility, that is, the latitude and the longitude (hereinafter referred to as the "latitude and longitude") of that parking facility, environmental conditions, coordinates of parking areas, and coordinates of points constituting landmarks on a two-dimensional surface. The position of the parking facility is, for example, the latitude and longitude of the vicinity of an entrance of the parking facility, the vicinity of the center of the parking facility, or a parking position. However, in the example illustrated in Fig. 2, the position of the parking facility and the environmental conditions are indicated in the same field.

The coordinates of the parking areas and the coordinates of the points constituting the landmarks are the coordinates in a coordinate system specific to that parking facility data. The coordinate system for the parking facility data will be hereinafter referred to as a "parking facility coordinate system." However, the parking facility coordinate system may be sometimes referred to as a first coordinate system. Regarding the parking facility coordinate system, for example, the coordinates of the vehicle 1 at the start of recording are set as its origin, a traveling direction of the vehicle 1 at the start of recording is set as its Y-axis, and a right direction of the vehicle 1 at the start of recording is set as its X-axis. For example, if the parking area is rectangular, the coordinates of a parking area are recorded as coordinates of four vertexes of that rectangular area. However, the shape of the parking area is not limited to the rectangular shape and may be a polygonal or oval shape other than the rectangular shape.

Furthermore, regarding each of the points constituting the landmarks, the type of the sensor which has acquired information of the relevant landmark is recorded as an "acquisition sensor." For example, the example illustrated in Fig. 2 shows that a first landmark of a parking facility 1 is calculated from a video captured by the camera 102. Furthermore, it is shown that a fourth landmark of the parking facility 1 is calculated from the output of the sonar 103 and the output of the LiDAR 105, respectively.

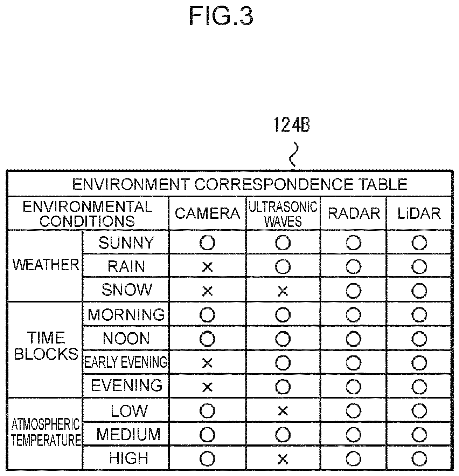

Fig. 3 is a diagram illustrating an example of an environment correspondence table 124B stored in the storage unit 124. In Fig. 3, the environment correspondence table 124B is a matrix in which the environmental conditions are listed vertically and the sensor types are listed horizontally. The environmental conditions are three conditions, that is, the weather, time blocks, and the atmospheric temperature. The weather is any one of sunny, rain, and snow. The time block is any one of morning, noon, early evening, and evening. The atmospheric temperature is any one of low, medium, and high. Predetermined threshold values are used to classify the time blocks and the atmospheric temperature. For example, the time block at and before 10:00 a.m. is set as the "morning" and the atmospheric temperature of 0 degrees or lower is set as "low."

The sensors correspond to the camera 102, the sonar 103, the radar 104, and the LiDAR 105 in a sequential order from the left to the right in Fig. 3. An x-mark in _124B indicates that the measurement accuracy of the sensor will degrade; and a o mark indicates that the measurement accuracy of the sensor will not degrade. However, even if the measurement accuracy degrades, if the degree of degradation is slight, the circle mark is assigned. For example, when the camera 102 is used and if the environmental conditions are "sunny" as the weather, the "morning" as the time block, and "medium" as the atmospheric temperature, all the conditions are given the o mark and, therefore, it can be determined that the accuracy will not degrade. However, if the weather among the above-mentioned environmental conditions becomes the rain, the accuracy will not degrade due to the time block and the atmospheric temperature, but the accuracy will degrade due to the weather. So, regarding all the environmental conditions, it is determined that the accuracy of the camera 102 will degrade.

(Outlier List 122A)

The outlier list 122A stores information of points of the local peripheral information 122B, which are not targets of processing by the in-vehicle processing apparatus 120. The outlier list 122A is updated as appropriate by the in-vehicle processing apparatus 120 as described later.

(Local Peripheral Information 122B)

The local peripheral information 122B stores the coordinates of the points constituting the landmarks which are detected by the in-vehicle processing apparatus 120 in an automatic parking phase described later. These coordinates are of a coordinate system in which, for example, the position of the vehicle 1 is set as its origin, a traveling direction of the vehicle 1 is set as its Y-axis, and the right side of a traveling direction is set as its X-axis with reference to the position and posture of the vehicle 1 when recording the local peripheral information 122B is started. This coordinate system will be hereinafter referred to as a "local coordinate system." The local coordinate system may sometimes be called a second coordinate system.

(Operation Outline of In-vehicle Processing Apparatus 120)

The in-vehicle processing apparatus 120 mainly has two operation phases, that is, a recording phase and an automatic parking phase. The in-vehicle processing apparatus 120 operates in the automatic parking phase unless it is given a special instruction from the user. Specifically speaking, the recording phase is started according to the user's instruction.

In the recording phase, the vehicle 1 is driven by the user and the in-vehicle processing apparatus 120 collects the parking facility data, that is, information of white lines and obstacles existing in the parking facility and information of the parking position on the basis of the information from the sensors with which the vehicle 1 is equipped. The in-vehicle processing apparatus 120 stores the collected information as the parking facility point group 124A in the storage unit 124.

In the automatic parking phase, the vehicle 1 is controlled by the in-vehicle processing apparatus 120 and the vehicle 1 is parked at a predetermined parking position on the basis of the parking facility point group 124A stored in the storage unit 124 and the information from the sensors with which the vehicle 1 is equipped. The in-vehicle processing apparatus 120 detects the white lines and the obstacles existing around the vehicle 1 on the basis of the information from the sensors and estimates the current position by checking it against the parking facility point group 124A. Specifically speaking, the in-vehicle processing apparatus 120 estimates the current position of the vehicle 1 in the parking facility coordinate system without using the information acquired from the GPS receiver 107. The recording phase and the automatic parking phase will be explained below in detail.

(Recording Phase)

The user presses the recording start button 110A near the entrance of the parking facility and causes the in-vehicle processing apparatus 120 to start the operation of the recording phase. Subsequently, the user drives the vehicle 1 by themselves to move the vehicle 1 to the parking position; and after parking the vehicle 1, the user presses the recording completion button 110B and causes the in-vehicle processing apparatus 120 to terminate the operation of the recording phase.

After the recording start button 110A is pressed by the user, the in-vehicle processing apparatus 120 starts the operation of the recording phase; and after the recording completion button 110B is pressed by the user, the in-vehicle processing apparatus 120 terminates the operation of the recording phase. The operation of the recording phase by the in-vehicle processing apparatus 120 is divided into three operations, that is, recording of the environmental conditions, extraction of point groups constituting landmarks, and recording of the extracted point groups.

The point group extraction processing by the in-vehicle processing apparatus 120 will be explained. After the recording start button 110A is pressed by the user, the in-vehicle processing apparatus 120 secures a temporary recording area in the RAM 122. Then, the in-vehicle processing apparatus 120 repeats the following processing until the recording completion button 110B is pressed. Specifically speaking, the in-vehicle processing apparatus 120 extracts the point groups constituting the landmarks on the basis of the image(s) captured by the camera 102. Furthermore, the in-vehicle processing apparatus 120 calculates a travel amount and a moving direction of the vehicle 1 which has moved since the last time image capturing by the camera 102 until the latest image capturing by the camera 102, on the basis of the outputs of the vehicle speed sensor 108 and the steering angle sensor 109. Then, the in-vehicle processing apparatus 120 records the point groups, which are extracted on the basis of the positional relationship with the vehicle 1 and the travel amount and the moving direction of the vehicle 1, in the RAM 122. The in-vehicle processing apparatus 120 repeats this processing.

The position of the vehicle 1 and the coordinates of the point groups are recorded as the coordinate values of the recorded coordinate system. The "recorded coordinate system" is treated as, for example, coordinate values of the coordinate system in which the position of the vehicle 1 when recording is started is set as its origin (0, 0), the traveling direction (posture) of the vehicle 1 when recording is started is set as its Y-axis, and the right direction of the vehicle 1 when recording is started is set as its X-axis. Accordingly, even if point groups are recorded in the same parking facility, the recorded coordinate system which is set by the position and the posture of the vehicle 1 when recording is started is different and, therefore, the point groups constituting the landmarks are recorded at different coordinates. Incidentally, the recorded coordinate system will be sometimes referred to as a "third coordinate system."

The user parks the vehicle at the target parking position and operates the recording completion button 110B. After the recording completion button 110B is pressed, the in-vehicle processing apparatus 120 records the current position as the parking position in the RAM 122. The parking position is recorded, for example, as coordinates of four corners by recognizing the vehicle 1 as approximating a rectangular shape. Furthermore, the in-vehicle processing apparatus 120 also records the latitude and longitude, which are output by the GPS receiver 107, as the coordinates of the parking facility. Next, the in-vehicle processing apparatus 120 executes point group recording processing as follows. However, the latitude and longitude which are output by the GPS receiver 107 when the recording start button 110A is pressed may be recorded as the coordinates of the parking facility. Moreover, the in-vehicle processing apparatus 120 acquire the current environmental conditions and records them in the RAM 122.

The in-vehicle processing apparatus 120 judges whether or not the coordinates of the parking facility recorded by the operation of the recording completion button 110B, that is, the latitude and longitude of the parking facility substantially match the coordinates and the environmental conditions of any one of the parking facility data which has already been recorded in the parking facility point group 124A. If any parking facility data with both substantially matching coordinates and environmental conditions does not exist, the in-vehicle processing apparatus 120 records the information of the point groups, which are saved in the RAM 122, as new parking facility data in the parking facility point group 124A. If any parking facility data with both substantially matching coordinates and environmental conditions exists, the in-vehicle processing apparatus 120 judges whether the information of the point groups with the substantially matching coordinates of the parking facilities should be merged into a point group of one parking facility or not. For this judgment, the in-vehicle processing apparatus 120: firstly performs coordinate transformation so that the parking position included in the parking facility data matches the parking position recorded in the RAM; and then calculates a point group matching degree which is a degree of matching between the point groups of the parking facility point group 124A and the point groups stored in the RAM 122. Then, if the calculated point group matching degree is larger than a threshold value, the in-vehicle processing apparatus 120 determines that they should be integrated; and if the calculated point group matching degree is equal to or smaller than the threshold value, the in-vehicle processing apparatus 120 determines that they should not be integrated. The calculation of the point group matching degree will be described later.

If the in-vehicle processing apparatus 120 determines that they should not be integrated, it records the point groups which are saved in the RAM 122, as new parking facility data, in the parking facility point group 124A. If the in-vehicle processing apparatus 120 determines that they should be integrated, it adds the point groups, which are saved in the RAM 122, to the existing parking facility data of the parking facility point group 124A.

(Flowchart of Recording Phase)

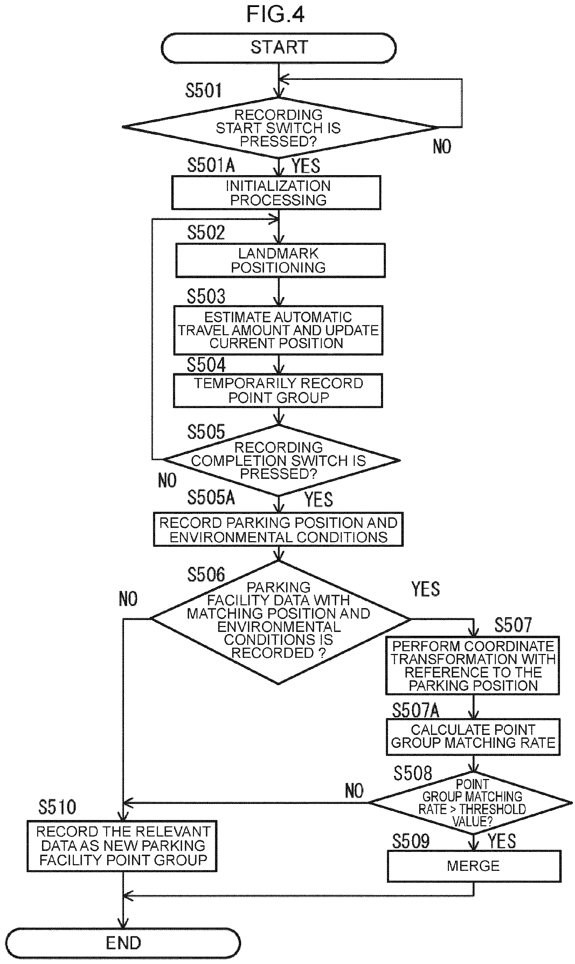

Fig. 4 is a flowchart illustrating the operation of the recording phase of the in-vehicle processing apparatus 120. An execution subject of each step explained below is the arithmetic operation unit 121 for the in-vehicle processing apparatus 120. The arithmetic operation unit 121 functions as the point group data acquisition unit 121A when executing the processing illustrated in Fig. 4.

In step S501, the point group data acquisition unit 121A judges whether the recording start button 110A is pressed or not. If it is determined that the recording start button 110A is pressed, the processing proceeds to step S501A; and if it is determined that the recording start button 110A is not pressed, the point group data acquisition unit 121A stays in step S501. In step S501A, the point group data acquisition unit 121A secures a new recording area in the RAM 122. The extracted point groups and the current position of the vehicle 1 are recorded, as the coordinates of the aforementioned recorded coordinate system, in this storage area.

In step S502, the point group data acquisition unit 121A acquires the information from the sensor group and performs the aforementioned landmark positioning, that is, extracts point groups constituting landmarks by using the images captured by the camera 102. In the next step S503, the point group data acquisition unit 121A: estimates a travel amount of the vehicle 1 during an amount of time after the last time image capturing until the latest image capturing by the camera 102; and updates the current position of the vehicle 1 in the recorded coordinate system which is recorded in the RAM 122. The travel amount of the vehicle 1 can be estimated by a plurality of means and, for example, the travel amount of the vehicle 1 can be estimated from changes of the position of a subject existing on the road surface in the images captured by the camera 102 as explained earlier. Moreover, if a GPS receiver with small error and high accuracy is mounted as the GPS receiver 107, its output may be used. Next, the processing proceeds to step S504.

In step S504, the point group data acquisition unit 121A saves the point groups extracted in step S502, as the coordinates of the recorded coordinate system, in the RAM 122 on the basis of the current position updated in step S503. In the subsequent step S505, the point group data acquisition unit 121A judges whether the recording completion button 110B is pressed or not; and if the point group data acquisition unit 121A determines that the recording completion button 110B is pressed, it proceeds to step S505A; and if the point group data acquisition unit 121A determines that the recording completion button 110B is not pressed, it returns to step S502. In step S505A, the point group data acquisition unit 121A acquires the current latitude and longitude of the vehicle 1 from the GPS receiver 107 and records the parking position, that is, the current position of the vehicle 1 and the coordinates of the four corners of the vehicle 1 in the recorded coordinate system in the RAM 122. Moreover, the current environment acquisition unit 121D acquires the current environmental conditions and records them in the RAM 122. Next, the processing proceeds to step S506.

In step S506, the point group data acquisition unit 121A judges whether any parking facility data with the matching position and environmental conditions is recorded in the parking facility point group 124A or not. To be exact, the matching position means that the current latitude and longitude of the vehicle 1 which were acquired in step S505A substantially match the latitude and longitude of the parking facility data. To substantially match the latitude and longitude means that, for example, the difference is within approximately 10 meters or 100 meters; and the range which should be considered to be the substantial match may be changed in accordance with the size of the parking facility. To be exact, the matching environmental conditions means that the environmental conditions acquired in step S505A substantially match the environmental conditions included in the parking facility data. The substantial match of the environmental conditions means that the difference of a subtle numerical value is accepted and they are classified as the same environmental conditions. For example, if threshold values for the temperature are 0 degrees and 30 degrees, it is determined that an environmental condition of 5 degrees and an environmental condition of 10 degrees substantially match each other; but it is determined that 2 degrees and -2 degrees do not substantially match each other.

If an affirmative judgment is obtained in S506, the processing proceeds to S507; and if a negative judgment is obtained in S506, the processing proceeds to S510. In the following explanation, the parking facility data of the parking facility point group 124A with the matching position of the vehicle 1 and the matching environmental conditions will be referred to as "target parking facility data."

In step S507, the point group data acquisition unit 121A transforms the recorded coordinate system, which is the coordinate system for the point group data saved in the RAM 122, into the coordinate system for the point group data of the target parking facility data with reference to the parking position. Specifically speaking, the point group data acquisition unit 121A derives a coordinate transformation formula for the recorded coordinate system and the parking facility coordinate system so that the parking position included in the target parking facility data matches the parking position recorded in step S505A. Then, by using this coordinate transformation formula, the point group data acquisition unit 121A transforms the coordinates of the points constituting the landmarks, which are saved as the recorded coordinate system in the RAM 122, into the parking facility coordinate system for the target parking facility data.

In the subsequent step S507A, the point group data acquisition unit 121A calculates a point group matching rate IB between the point group data saved in the RAM 122 and the target parking facility data. The point group matching rate IB is calculated according to the following Expression 1.

$$IB = 2*Din/(D1+D2) \dots \text{Expression 1}$$

However, "Din" in Expression 1 is the number of points regarding which the distance between each point of the point group data, which was coordinate-transformed in step S507, and each point of the point group data of the target parking facility data is within a specified distance. Also, regarding Expression 1, "D1" is the number of points of the point group data saved in the RAM 122 and "D2" is the number of points of the point group data of the target parking facility data. Next, the processing proceeds to step S508.

In step S508, the point group data acquisition unit 121A judges whether the point group matching rate calculated in step S507A is larger than a specified threshold value or not. If the point group data acquisition unit 121A determines that the point group matching rate calculated in step S507A is larger than the threshold value, the processing proceeds to step S509; and if the point group data acquisition unit 121A determines that the point group matching rate calculated in step S507A is equal to or smaller than the threshold value, the processing proceeds to step S510.

In step S509, the point group data acquisition unit 121A executes merge processing, that is, adds the point group data, which was coordinate-transformed in step S507, to the target parking facility data of the parking facility point group 124A stored in the storage unit 124. In step S510 which is executed if the negative judgment is obtained in step S506 or step S508, the point group data acquisition unit 121A records the point group data saved in the RAM 122, and the latitude and longitude and the parking position of the vehicle 1, which were recorded in step S505A, as new parking facility data in the parking facility point group 124A. The point group data acquisition unit 121A then terminates the flowchart in Fig. 4.

(Automatic Parking Phase)

When the user drives the vehicle 1 and moves it to the vicinity of any one of the parking facilities recorded in the parking facility point group 124A, it is displayed on the display device 111 that automatic parking is possible. When the user presses the automatic parking button 110C under this circumstance, automatic parking processing by the in-vehicle processing apparatus 120 is started. The operation of the in-vehicle processing apparatus 120 will be explained below by using a flowchart.

(Entire Flow of Automatic Parking Processing)

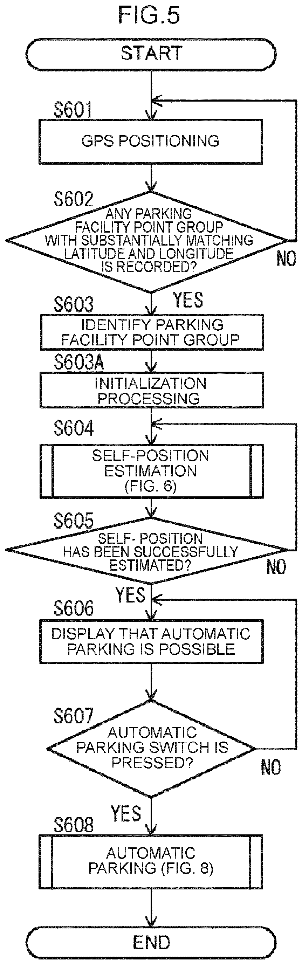

Fig. 5 is a flowchart illustrating the entire operation of the automatic parking phase of the in-vehicle processing apparatus 120. The execution subject of each step explained below is the arithmetic operation unit 121 for the in-vehicle processing apparatus 120.

The in-vehicle processing apparatus 120 firstly measures the position of the current latitude and longitude by using the GPS receiver 107 (step S601) and judges whether or not the latitude and longitude substantially matches the latitude and longitude of any one piece of the parking facility data of the parking facility point group 124A. In other words, the in-vehicle processing apparatus 120 judges whether or not any parking facility exists within a specified distance from the position of the vehicle 1 (step S602). If the in-vehicle processing apparatus 120 determines that the latitude and longitude of any one piece of the parking facility data substantially match the latitude and longitude of the vehicle 1, the processing proceeds to step S603; and if the in-vehicle processing apparatus 120 determines that the latitude and longitude of any one piece of the parking facility data do not substantially match the latitude and longitude of the vehicle 1, the processing returns to step S601. Incidentally, if the processing returns to step S601, there is a possibility that an affirmative judgment may be obtained in step S602 as a result of movements the vehicle 1 as it is driven by the user. Incidentally, the environmental conditions are not considered in S602.

Then, the in-vehicle processing apparatus 120 identifies the parking facility data having the latitude and longitude which substantially match the current position of the vehicle 1, from among the plurality of pieces of the parking facility data included in the parking facility point group 124A (step S603). Incidentally, if the parking facility data are recorded with different environmental conditions with respect to the same parking facility, the plurality of pieces of the parking facility data are identified in S603.

Next, in S603, the in-vehicle processing apparatus 120 performs initialization of the local peripheral information 122B to be stored in the RAM 122 and initialization of the current position of the vehicle 1 to be saved in the RAM 122 as initialization processing. Specifically speaking, if previous information is recorded, such information is deleted and a new coordinate system is set. In this embodiment, this coordinate system will be referred to as a "local coordinate system." This local coordinate system is set on the basis of the position and posture of the vehicle 1 when step S603A is executed. For example, the position of the vehicle 1 when step S603A is executed is set as an origin of the local coordinate system; and an X-axis and a Y-axis are set according to directions when step S603A is executed. Moreover, the initialization of the current position of the vehicle 1 is to set the current position of the vehicle 1 to the origin (0, 0).

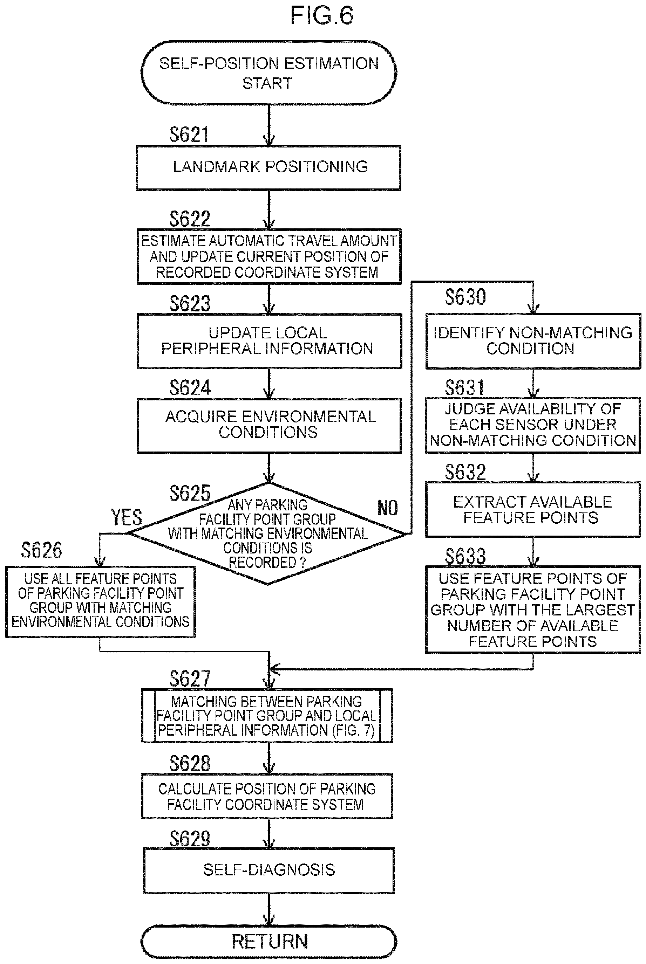

Next, the in-vehicle processing apparatus 120 estimates the self-position, that is, the position of the vehicle 1 in the parking facility coordinate system in accordance with procedures illustrated in Fig. 6 (step S604); and in step S605, the in-vehicle processing apparatus 120 judges whether the self-position has been successfully estimated or not. If the in-vehicle processing apparatus 120 determines that the self-position has been successfully estimated, the processing proceeds to step S606; and the in-vehicle processing apparatus 120 determines that the self-position has not been successfully estimated, the processing returns to step S604.

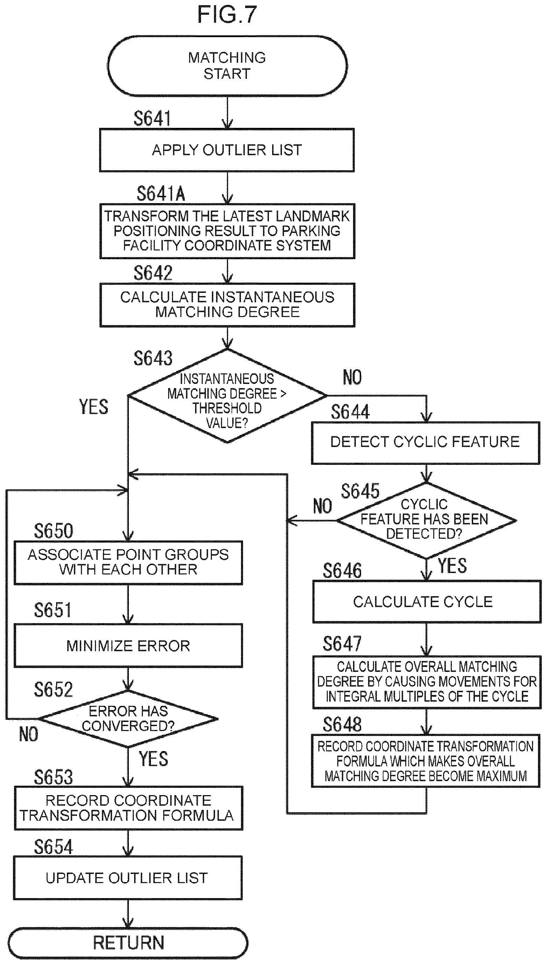

In step S606, the in-vehicle processing apparatus 120 displays on the display device 111 that the automatic parking is possible; and in the subsequent step S607, the in-vehicle processing apparatus 120 judges whether or not the automatic parking button 110C is pressed by the user. If the in-vehicle processing apparatus 120 determines that the automatic parking button 110C is pressed, the processing proceeds to step S608 and the in-vehicle processing apparatus 120 executes the automatic parking processing in accordance with the procedures illustrated in Fig. 7; and if the in-vehicle processing apparatus 120 determines that the automatic parking button 110C is not pressed, the processing returns to step S606.

The details of the self-position estimation processing executed in step S604 in Fig. 5 will be explained with reference to Fig. 6. When executing the processing illustrated in steps S621 to S623 in Fig. 6, the arithmetic operation unit 121 functions as the local peripheral information creation unit 121B.

The landmark positioning in step S621, the estimation of the travel amount of the driver's own vehicle in step S622, and the recording of the local peripheral information 122B in step S623 are respectively almost the same as the processing in steps S502 to S504 in Fig. 4. The difference is that the data stored in the RAM 122 is recorded as the local peripheral information 122B. Next, the in-vehicle processing apparatus 120 acquires the environmental conditions (S624) and judges whether or not a parking facility point group which matches such environmental conditions has already been recorded as the target parking facility; and if the in-vehicle processing apparatus 120 determines that the parking facility point group which matches such environmental conditions has already been recorded as the target parking facility, the processing proceeds to S626; and if the in-vehicle processing apparatus 120 determines that the parking facility point group which matches such environmental conditions has not been recorded as the target parking facility, the processing proceeds to S630. In other words, if a parking facility point group with both the substantially matching position and environmental conditions is recorded, the processing proceeds to S626; and in other cases, the processing proceeds to S630.

In S626, the in-vehicle processing apparatus 120 decides to use all feature points of the parking facility point group with the matching environmental conditions and proceeds to S627. In S627, the in-vehicle processing apparatus 120 executes matching processing, the details of which are illustrated in Fig. 7. This matching processing is to obtain a correspondence relationship between the parking facility coordinate system and the local coordinate system, that is, a coordinate transformation formula for the parking facility coordinate system and the local coordinate system. In the subsequent step S628, the in-vehicle processing apparatus 120 calculates the coordinates of the vehicle 1 in the parking facility coordinate system, that is, the self-position of the vehicle 1 by using the coordinates of the vehicle 1 in the local coordinate system updated in step S622 and the coordinate transformation formula obtained in step S627. Next, the processing proceeds to step S629.

In step S629, the in-vehicle processing apparatus 120 executes self-diagnosis to judge reliability of the position calculated in step S628. The self-diagnosis is conducted to make the judgment by using, for example, the following three indexes. As a first index, the travel amount of the vehicle 1 which is estimated according to the publicly known dead reckoning technology by using the outputs of the vehicle speed sensor 108 and the steering angle sensor 109 is compared with the travel amount during a specified period of time, which is estimated by the self-position estimation; and if the difference between them is larger than a predetermined threshold value, the in-vehicle processing apparatus 120 determines that the reliability is low.

As a second index, the judgment is made based on an error amount of corresponding points calculated at the time of matching. If the error amount is larger than a predetermined threshold value, the in-vehicle processing apparatus 120 determines that the reliability is low. As a third index, the judgment is made on whether there is a similarity solution or not. When the similarity solution is searched by, for example, making a translational movement as much as the width of a parking frame on the basis of the obtained solution, and if there are almost the same number of points whose corresponding point errors are within a certain range, the in-vehicle processing apparatus 120 determines that the reliability is low. If it is not determined by all these three indexes that the reliability is low, the in-vehicle processing apparatus 120 determines that the self-position has been successfully estimated.

In S630 which is executed if the negative judgment is obtained in S625, the in-vehicle processing apparatus 120 identifies non-matching environmental conditions. Incidentally, the non-matching environmental conditions may be hereinafter sometimes referred to as "non-matching conditions." For example, if only one piece of the parking facility data which substantially matches the current position of the vehicle 1 is recorded in the parking facility point group 124A, the in-vehicle processing apparatus 120 identifies an environmental condition(s) that is the above-mentioned environmental condition(s) which does not match the environmental condition(s) obtained in S624. Subsequently, in S631, the in-vehicle processing apparatus 120 judges whether or not each sensor is available under the non-matching condition by referring to the environment correspondence table 124B.

For example, if the recorded environmental conditions are set so that the weather is rain, the time block is noon, and the atmospheric temperature is medium, and the current environmental conditions are set so that the weather is sunny, the time block is noon, and the atmospheric temperature is medium, the availability is judged as follows. Specifically speaking, the non-matching condition is identified as the weather and the environmental condition of the recorded parking facility data is rain, so that in the example of the environment correspondence table 124B illustrated in Fig. 3, only the camera 102 is given the x-mark, that is, only the camera 102 is unavailable due to the accuracy degradation. In other words, in this example, it is determined that the sonar 103, the radar 104, and the LiDAR 105 are available.

Next in S632, the in-vehicle processing apparatus 120 extracts available feature points from the recorded parking facility data on the basis of the availability judgment in S631. In the case of the above-mentioned example, the in-vehicle processing apparatus 120 determines the feature points regarding which any one of the sonar 103, the radar 104, and the LiDAR 105 is included in the acquisition sensor column are available and extracts such feature points. Incidentally, in this example, even if the camera 102 is indicated in the acquisition sensor column, if at least one of the sonar 103, the radar 104, and the LiDAR 105 is also indicated, the relevant feature points are determined as available.

Subsequently in S633, if a plurality of pieces of the parking facility data with substantially matching positions exist, the in-vehicle processing apparatus 120 decides to use the feature points of the parking facility data with the largest number of available feature points extracted in S632, and then the processing proceeds to S627. Incidentally, if there is only one piece of the parking facility data with the substantially matching position, the feature points extracted in S632 among the feature points of that parking facility data are used.

The details of the matching processing executed in step S627 in Fig. 6 will be explained with reference to Fig. 7. When executing the processing illustrated in Fig. 7, the arithmetic operation unit 121 functions as the position estimation unit 121C.

In step S641, the position estimation unit 121C applies the outlier list 122A, which is stored in the RAM 122, to the local peripheral information 122B and temporarily sets points listed in the outlier list 122A, from among the point groups included in the local peripheral information 122B, as non-targets of the processing. This application range is from step S642 to step S653; and in step S654, the points which were included in the outlier list 122A before also become the targets. However, since step S641 to step S643 cannot be executed at the first execution of the flowchart illustrated in Fig. 7, the execution is started from step S650. Next, the processing proceeds to step S641A.

In step S641A, the position estimation unit 121C transforms the point groups detected from the latest captured image, that is, the coordinates of the point groups constituting the landmarks detected in step S621 in Fig. 6 into coordinates of the parking facility coordinate system. This transformation is implemented by using the position of the vehicle 1 in the local coordinate system, which was updated in step S622, and the coordinate transformation formula, which was calculated last time, from the local coordinate system to the parking facility coordinate system.

In the subsequent step S642, an instantaneous matching degree IC is calculated. The instantaneous matching degree IC is calculated according to Expression 2 below.

$$IC = DIin/DIall \ldots \text{Expression 2}$$

However, "DIin" in Expression 2 is the number of points regarding which the distance to the points constituting the closest parking facility point group 124A, from among the point groups detected from the latest sensor outputs and transformed to the parking facility coordinate system in step S641A, is equal to or smaller than a predetermined threshold value. Furthermore, "DIall" in Expression 2 is the number of the point groups detected in step S621. Next, the processing proceeds to step S643.

In step S643, the position estimation unit 121C judges whether the instantaneous matching degree IC calculated in step S642 is larger than a threshold value or not. If the position estimation unit 121C determines that the instantaneous matching degree IC is larger than the threshold value, the processing proceeds to step S650; and if the position estimation unit 121C determines that the instantaneous matching degree IC is equal to or smaller than the threshold value, the processing proceeds to step S644.

In step S644, the position estimation unit 121C detects the parking facility data which becomes a target of the parking facility point group 124A, that is, a cyclic feature such as a plurality of aligned parking frames from the point group data. Since the point groups included in the parking facility point group can be obtained by extracting edges or the like in images as described earlier, parking frame lines can be detected from points aligned with the distance between them corresponding to the width of a white line. In the subsequent step S645, the position estimation unit 121C judges whether or the cyclic feature was detected in step S644; and if the position estimation unit 121C determines that the cyclic feature was detected, the processing proceeds to step S646; and if the position estimation unit 121C determines that the cyclic feature failed to be detected, the processing proceeds to step S650. In step S646, the position estimation unit 121C calculates a cycle of the cyclic feature, for example, the width of the parking frame. The width of the parking frame herein used is the distance between the white lines constituting the parking frame. Next, the processing proceeds to step S647.

In step S647, the position estimation unit 121C uses the coordinate transformation formula calculated last time in step S53 as a reference to change this coordinate transformation formula in a plurality of ways and calculates an overall matching degree IW of each of the changed coordinate transformation formulas. The coordinate transformation formula is changed in a plurality of ways so that the parking facility point groups are moved for integral multiples of the detected cyclic feature. The overall matching degree IW is calculated according to Expression 3 below.

$$IW = DWin/DWall \ ... \ Expression \ 3$$

However, "DWin" in Expression 3 is the number of points regarding which the distance to the points constituting the closest parking facility point group 124A, from among the points constituting the local peripheral information 122B which are transformed to the parking facility coordinate system by using the aforementioned coordinate transformation formula, is equal to or smaller than a predetermined threshold value. Furthermore, "DWall" in Expression 3 is the number of points detected in step S621. Next, the processing proceeds to step S648.

In step S648, the position estimation unit 121C stores the coordinate transformation formula which gives the maximum overall matching degree IW, from among the plurality of the overall matching degrees IW calculated in step S647, in the RAM 122 and proceeds to step S650.

The association processing in step S650, the error minimization processing in step S651, and the convergence judgment processing in step S625 can use the ICP (Iterative Closest Point) algorithm which is the known point group matching technology. However, setting of an initial value in step S650 is specific to this embodiment, so it will be explained in detail; and regarding other processing, only its outline will be explained.

In step S650 which is executed if an affirmative judgment is obtained in step S643, if a negative judgment is obtained in step S645, if the execution of step S648 is completed, or if a negative judgment is obtained in step S652, the association between the point groups included in the parking facility data the parking facility point group 124A and the point groups included in the local peripheral information 122B is calculated. In the case where step S650 is executed immediately after step S643 or step S648, values obtained by the coordinate transformation using the coordinate transformation formula recorded in the RAM 122 are used for the point group data of the local peripheral information 122B. Specifically speaking, in the case where step S650 is executed when the affirmative judgment is obtained in step S643, the coordinate transformation formula calculated in step S653 which was executed last time is used. On the other hand, in the case where step S650 is executed immediately after step S648, the coordinate transformation formula stored in step S648 is used. Next, the processing proceeds to step S651.

In step S651, the coordinate transformation formula is changed to minimize a corresponding point error. For example, the coordinate transformation formula is changed so that the sum of indexes for the distance between the points associated in step S650 becomes minimum. The sum of absolute values of the distance may be adopted as the sum of the indexes for the distance between the associated points. In the subsequent step S652, the position estimation unit 121C judges whether the error has converged or not; and if the position estimation unit 121C determines that the error has converged, the processing proceeds to step S653; and if the position estimation unit 121C determines that the error has not converged, the processing returns to step S650. In the subsequent step S653, the coordinate transformation formula which was changed at last in step S651 is saved in the RAM 122 and the processing proceeds to step S654.

In step S654, the position estimation unit 121C updates the outlier list 122Aas follows. Firstly, the position estimation unit 121C clears the existing outlier list 122A stored in the RAM 122. Next, the position estimation unit 121C transforms the point groups of the local peripheral information 122B to the parking facility coordinate system by using the coordinate transformation formula recorded in step 653 and calculates the distance between each of the points constituting the local peripheral information 122B and its corresponding point constituting the parking facility point group 124A, that is, the Euclidean distance. Then, if the calculated distance is longer than a predetermined distance, the position estimation unit 121C adds that point of the local peripheral information 122B to the outlier list 122A. However, under this circumstance, to be positioned spatially at the end may be a further condition to be added to the outlier list 122A. The expression "spatially at the end" indicates a point with far distances to other points, for example, a point obtained when recording is started. The outlier list 122A is updated by the above-described processing. Then, the position estimation unit 121C terminates the flowchart in Fig. 7.

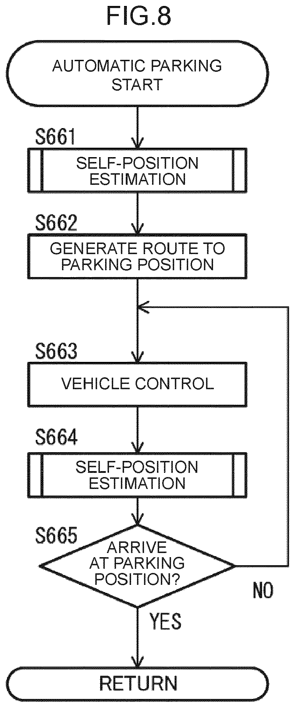

The details of the automatic parking processing executed in step S608 in Fig. 5 will be explained with reference to Fig. 8. The execution subject of each step explained below is the in-vehicle processing apparatus 120. In step S661, the in-vehicle processing apparatus 120 estimates the position of the vehicle 1 in the parking facility coordinate system. Since the processing of this step is similar to that of step S604 in Fig. 5, an explanation about it is omitted. In the subsequent step S662, the in-vehicle processing apparatus 120 generates a travel route from the position estimated in step S661 to the parking position stored in the parking facility point group 124A by a known route generation method. Next, the processing proceeds to step S663.

In step S663, the in-vehicle processing apparatus 120 controls the steering device 131, the driving device 132, and the braking device 133 via the vehicle control apparatus 130 and moves the vehicle 1 to the parking position along the route generated in step S662. However, an operating command may be output to the driving device 132 only when the automatic parking button 110C keeps being pressed by the user. Moreover, if humans, moving vehicles, and so on are extracted from the images captured by the camera 102, the in-vehicle processing apparatus 120 operates the braking device 133 and stops the vehicle 1. In the subsequent step S664, the position of the vehicle 1 is estimated in a manner similar to step S661. In the subsequent step S665, the in-vehicle processing apparatus 120 judges whether parking has been completed or not, that is, whether the vehicle 1 has reached the parking position or not; and if the in-vehicle processing apparatus 120 determines that parking has not been completed, the processing returns to step S663; and if the in-vehicle processing apparatus 120 determines that parking has been completed, it terminates the flowchart in Fig. 8.

(Operation Example)

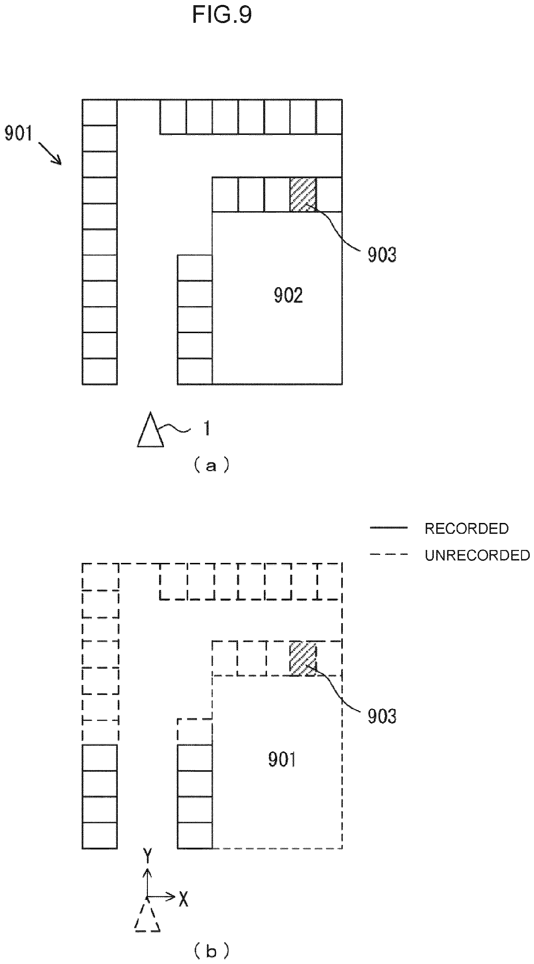

Specific operations of the recording phase and the automatic parking phase will be explained with reference to Fig. 9 to Fig. 14. Fig. 9(a) is a plan view illustrating an example of the parking facility 901. The parking facility 901 is provided around a building 902. There is only one entrance/exit for the parking facility 901 at the lower left of the drawing. Rectangles illustrated in Fig. 9(a) are parking frames which are road surface paint and a parking frame 903 which is hatched is a parking area for the vehicle 1 (the area to become the parking position when parking is completed). These operation examples will be explained by assuming that only landmarks are the parking frame lines. In these operation examples, the vehicle 1 is represented by a triangle as illustrated in Fig. 9(a) and an acute angle of the triangle represents a traveling direction of the vehicle 1.

(Operation Example: Recording Phase 1)

When the user presses the recording start button 110A in the vicinity of the parking facility 901, the in-vehicle processing apparatus 120 starts the landmark positioning and records the coordinates of points constituting the parking frame lines (step S501 in Fig. 4: YES; S502 to S504). Then, until the recording completion button 110B of the vehicle 1 is pressed, the in-vehicle processing apparatus 120 repeats the processing of steps S502 to S504 in Fig. 4.

Fig. 9(b) is a diagram in which point groups of the landmarks saved in the RAM 122 are visualized. In Fig. 9(b), solid lines represents the point groups of the landmarks saved in the RAM 122 and broken lines represent the landmarks which are not saved in the RAM 122. The camera 102 of the vehicle 1 has a limited range capable of capturing images. So, when the vehicle 1 is located in the vicinity of the entrance of the parking facility 901 as illustrated in Fig. 9(b), only the parking frame lines in the vicinity of the parking facility 901 are recorded. When the user moves the vehicle 1 to the back of the parking facility 901, the in-vehicle processing apparatus 120 can record the point groups of the landmarks of the entire parking facility 901.

When the user stops the vehicle 1 in the parking frame 903 and presses the recording completion button 110B, the in-vehicle processing apparatus 120 acquires the latitude and longitude of the vehicle 1 from the GPS receiver 107 and records the coordinates of the four corners of the vehicle 1 (step S505: YES; S505A). Furthermore, the in-vehicle processing apparatus 120 acquires and records the environmental conditions. If any parking facility data which substantially matches the current latitude and longitude of the vehicle 1 and the current environmental conditions is not recorded in the parking facility point group 124A (S506: NO), the in-vehicle processing apparatus 120 records the point groups, which are saved in the RAM 122, as new data constituting the parking facility point group 124A, that is, new parking facility data.

(Operation Example: Recording Phase 2)

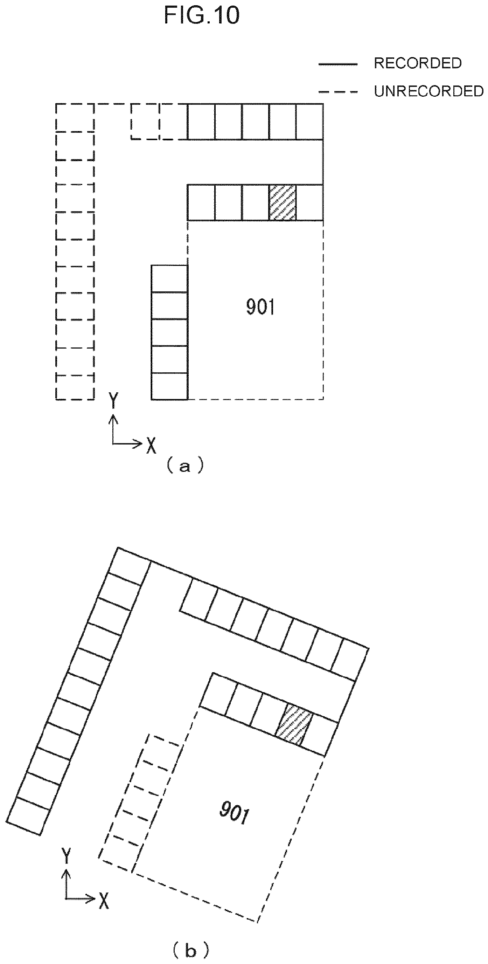

As another example, an explanation will be provided about a case where point group data illustrated in Fig. 10(a) is recorded as the parking facility data of the parking facility point group 124A and point group data illustrated in Fig. 10(b) is newly obtained. The point group data illustrated in Fig. 10(a) is, for example, point group data obtained when driving from the entrance of the parking facility 901 illustrated Fig. 9(a) and driving closer to the right side of an aisle and reaching the parking position. Since the vehicle 1 has run closer to the right side of the aisle as compared to Fig. 9(a), the point group data of the parking frames indicated with dotted lines in Fig.

10(a) is not obtained.

The point group data illustrated in Fig. 10(b) is, for example, point group data obtained when driving from the entrance of the parking facility 901 and driving closer to the left side of the aisle and reaching the parking position. Since the vehicle 1 has run closer to the left side of the aisle as compared to Fig. 9(a), the point group data of the parking frames indicated with dotted lines in Fig. 10(b). Furthermore, regarding the point group data illustrated in Fig. 10(b), when the user pressed the recording start button 110A, the vehicle 1 did not face directly opposite to and at a right angle to the parking facility 901. So, the parking facility 901 is recorded as if the parking facility 901 is inclined as compared to Fig. 10(a).

When the user presses the recording completion button 110B under the above-described circumstance and if it is determined that the parking facility data which substantially matches the current latitude and longitude of the vehicle 1 and the current environmental conditions is recorded in the parking facility point group 124A (S506: YES), the coordinate transformation is conducted with reference to the parking position in Fig. 10(a) and Fig. 10(b), that is, the parking frame 903 (step S507). Then, the in-vehicle processing apparatus 120 calculates the point group matching rate IB (step S507A); and if the in-vehicle processing apparatus 120 determines that the point group matching rate IB is larger than a specified threshold value (step S508: YES), the point group data illustrated in Fig. 10(b) is integrated with the point group data illustrated in Fig. 10(a) (step S509). As a result of this integration, the point groups of the parking frame lines on the left side of the drawing which were not recorded in Fig. 10(a) are newly recorded; and regarding the point groups constituting the parking frame lines on the right side and in the upper part of the drawing, which were already recorded, their density becomes thick.

(Operation Example: Execution Phase 1)

An operation example of the matching processing will be explained as a first operation example of the execution phase. In this operation example, the point group data corresponding to the entire parking facility 901 illustrated in Fig. 9(a) is stored in the parking facility point group 124A in advance. Furthermore, it is assumed that the environmental conditions of both of them are the same.

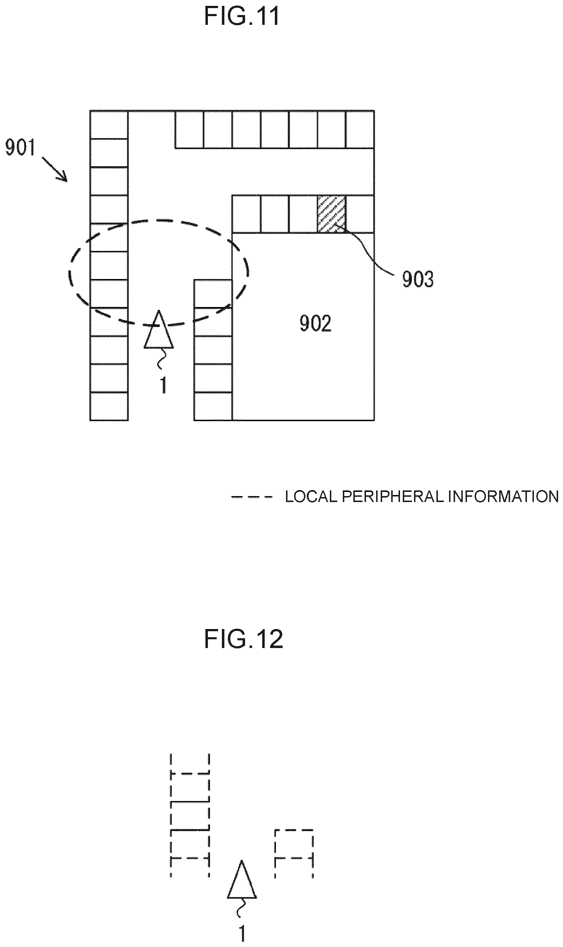

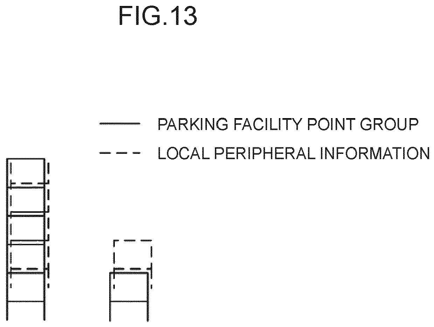

Fig. 11 is a diagram illustrating the current position of the vehicle 1 in the parking facility 901 illustrated in Fig. 9(a). The vehicle 1 faces upwards in the drawing. Fig. 12 and Fig. 13 illustrate the parking frame lines in a part surrounded with a broken line circle in Fig. 11, which is an area ahead of the vehicle 1.

Fig. 12 is a diagram illustrating data obtained by transforming the point groups extracted from an image of the vehicle 1 captured at the position indicated in Fig. 11 into the parking facility coordinates. Specifically speaking, the point groups illustrated in Fig. 12 are the point groups detected from the latest captured image among the local peripheral information 122B and are the data processed in step S641A in Fig. 7. However, such point groups are indicated with not dots, but broken lines in Fig. 12. Furthermore, in Fig. 12, the vehicle 1 is also displayed as a comparison with Fig. 11. Referring to Fig. 12, the point group data of the parking frame lines exist continually without any breaks on the left side of the vehicle 1; and on the right side the vehicle 1, the point group data of the parking frame lines exist only in close front of the vehicle 1.

Fig. 13 is a diagram illustrating a comparison between the parking facility point group 124A and the local peripheral information 122B illustrated in Fig. 12 when the estimation of the position of the vehicle 1 in the parking facility coordinate system includes an error. Referring to Fig. 13, since the previous estimation of the position was deviated for approximately the width of one parking frame, the local peripheral information 122B existing on the right side of the vehicle 1 deviates from the parking facility point group 124A. If the instantaneous matching degree IC is calculated under this condition (step S642 in Fig. 7), the instantaneous matching degree IC becomes a low value due to the above-mentioned deviation on the right side of the vehicle 1. If it is determined that this value is lower than the threshold value (step S643: NO), the in-vehicle processing apparatus 120 detects the parking frames as the cyclic feature (steps S644 and S645: YES), the width of the parking frame is calculated from the parking facility point group 124A (step S646) and the overall matching degree IW is calculated by causing movements for integral multiples of the width of the parking frame (step S647).

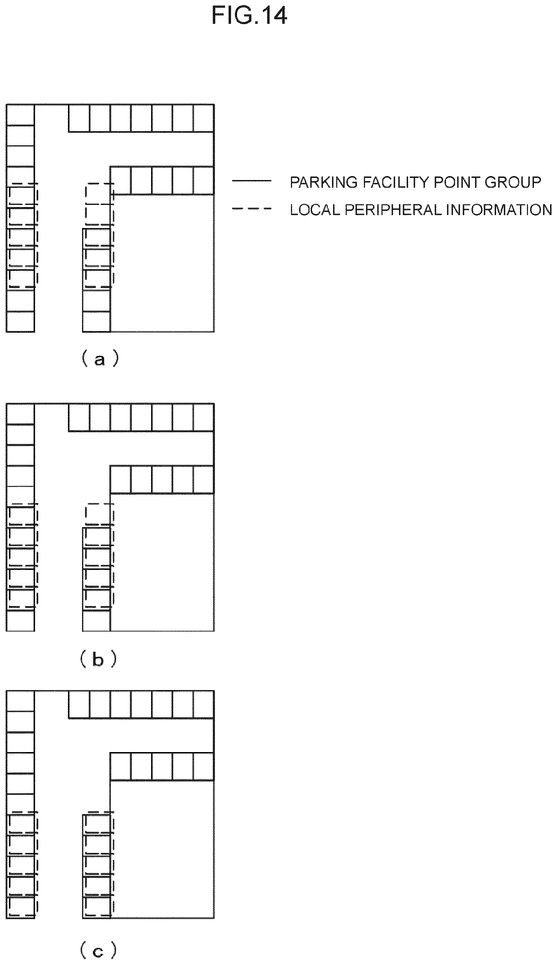

Figs. 14(a) to 14(c) are diagrams illustrating the relationship with the parking facility point group 124A when the local peripheral information 122B illustrated in Fig. 12 is moved for integral multiples of the width of the parking frame. In Figs. 14(a) to 14(c) respectively, the local peripheral information 122B illustrated in Fig. 12 is moved upwards in the relevant drawing for +1 times, 0 times, and -1 times (multiplied by) the width of the parking frame. In Fig. 14A, the local peripheral information 122B is moved upwards in the drawing as much as the width of one parking frame and the deviation between the local peripheral information 122B and the parking facility point group 124A is enlarged. Accordingly, the overall matching degree IW in Fig. 14(a) becomes smaller than the case where the local peripheral information 122B is not moved. In Fig. 14(b), the local peripheral information 122B is not moved and the local peripheral information 122B deviates from the parking facility point group 124A as much as the width of one parking frame as seen in Fig. 13. In Fig. 14(c), the local peripheral information 122B is moved downwards in the drawing as much as the width of one parking frame, so that the local peripheral information 122B substantially matches the parking facility point group 124A. Therefore, the overall matching degree IW in Fig. 14(c) becomes larger than the case where the local peripheral information 122B is not moved.

Since a movement amount of the local peripheral information 122B and an increase/decrease of the overall matching degree IW are in the above-described relationship, so that in the example illustrated in Fig. 14, it is determined that the overall matching degree IW corresponding to Fig. 14(c) is the maximum and the coordinate transformation formula corresponding to this movement is stored in the RAM 122 (step S648). In this way, the in-vehicle processing apparatus 120 enhances the accuracy of the estimated position.

According to the above-described first embodiment, the following operational advantages are obtained.

(1) The in-vehicle processing apparatus 120 includes: the storage unit 124 that stores the point group data (the parking facility point group 124A) including the environmental conditions which are created based on the outputs of the camera 102, the sonar 103, the radar 104, and the LiDAR 105 for acquiring the information of the surroundings of the vehicle and which are conditions for the ambient environment when the outputs of, for example, the camera 102 are obtained, and including a plurality of coordinates of points indicating parts of objects in the parking facility coordinate system; the interface 125 that functions as the sensor input unit which acquires the outputs of the camera 102, the sonar 103, the radar 104, and the LiDAR 105 for acquiring the information of the surroundings of the vehicle 1; the current environment acquisition unit 121D that acquires the environmental conditions; the interface 125 that functions as the movement information acquisition unit which acquires the information about movements of the vehicle 1; and the local peripheral information creation unit 121B that generates the local peripheral information 122B including the position of the vehicle in the local coordinate system and a plurality of coordinates of points indicating parts of the objects in the local coordinate system on the basis of the information acquired by the sensor input unit and the movement information acquisition unit. The in-vehicle processing apparatus 120 further includes the position estimation unit 121C that estimates the relationship between the parking facility coordinate system and the local coordinate system on the basis of the parking facility data, the local peripheral information 122B, the environmental conditions included in the parking facility data, and the environmental conditions acquired by the current environment acquisition unit 121D and estimates the position of the vehicle 1 in the parking facility coordinate system.

The in-vehicle processing apparatus 120 estimates the coordinate transformation formula for the parking facility coordinate system and the local coordinate system on the basis of the parking facility point group 124A and the local peripheral information 122B and estimates the position of the vehicle 1 in the parking facility coordinate system. The parking facility point group 124A is the information which is stored in the storage unit 124 in advance; and the local peripheral information 122B is generated from the outputs of the camera 102, the vehicle speed sensor 108, and the steering angle sensor 109. Specifically speaking, the in-vehicle processing apparatus 120 can acquire the information of the point groups in the coordinate system which is different from the coordinate system for the recorded point groups and estimate the position of the vehicle 1 in the recorded coordinate system on the basis of the correspondence relationship between the different coordinate systems. Furthermore, the in-vehicle processing apparatus 120 estimates the coordinate transformation formula for the parking facility coordinate system and the local coordinate system on the basis of the parking facility point group 124A and the local peripheral information 122B. So, even if part of the point group data of the local peripheral information 122B includes noise, it is hardly affected by the noise. Specifically speaking, the estimation of the position of the vehicle 1 by the in-vehicle processing apparatus 120 is resistant to disturbances. Furthermore, the position of the vehicle 1 in the parking facility coordinate system can be estimated by also considering the environmental conditions which might affect the accuracy of the sensors.

(2) The environmental condition(s) includes at least one of the weather, the time blocks, and the atmospheric temperature. Since the weather such as rain and snow causes subtle noise and adversely affects the camera 102, it is helpful to give consideration to the weather. Furthermore, the snow weather indirectly indicates that the atmospheric temperature is low, it is helpful to give consideration to the weather when using the sonar 103 whose accuracy degrades under a low-temperature environment. Furthermore, the surrounding brightness changes significantly depending on the time block, so it is helpful to give consideration to the time block when using the camera 102.

(3) The type of the sensor used to create the relevant coordinates is recorded in the point group data with respect to each coordinate. If the position estimation unit 121C determines that the environmental conditions included in the point group data match the environmental conditions acquired by the current environment acquisition unit 121D, it estimates the relationship between the parking facility coordinate system and the local coordinate system by using all the coordinates included in the point group data. Furthermore, if the position estimation unit 121C determines that the environmental conditions included in the point group data do not match the environmental conditions acquired by the current environment acquisition unit, it selects the coordinates in the parking facility coordinate system to be used to estimate the relationship between the parking facility coordinate system and the local coordinate system on the basis of the environmental conditions included in the point group data and the type of the sensor.

The outputs of the sensors are affected by the environmental conditions as described earlier and include an error(s) under specific conditions, thereby causing the accuracy degradation. Specifically speaking, a point group(s) created under the environmental condition which causes the accuracy degradation of the sensor may not possibly match a point group(s) which closely represents the shape of the relevant parking facility. However, this is not a problem in this embodiment. That is because if it is estimated that an error will occur in the same manner as at the time of recording, the position can be estimated by comparing both of them. Accordingly, if the environmental conditions match each other, the position is estimated by using all pieces of the recorded point group data. On the other hand, if the environmental conditions are different, errors included in the outputs of the sensor are different; and, therefore, there is a low possibility that they match each other, and there is rather a fear of impeding the estimation of the position. Therefore, available feature points are selected from feature points of the recorded parking facility data.

(4) If the position estimation unit 121C determines that the environmental conditions included in the point group data do not match the environmental conditions acquired by the current environment acquisition unit, it selects the coordinates created based on the output of the sensor of the high accuracy type under the environmental conditions included in the point group data by referring to the environment correspondence table 124B. Therefore, it is possible to prevent erroneous estimation of the position by using the output of the low accuracy sensor, which was recorded in the past.

The above-described first embodiment may be varied as follows.

(1) A plurality of sensors of the same type may exist as the sensors included in the automatic parking system 100. For example, a plurality of cameras 102 may exist and capture images from different directions. Furthermore, there may at least two types of sensors included in the automatic parking system 100.

(2) The in-vehicle processing apparatus 120 does not have to receive the sensing results from the vehicle speed sensor 108 and the steering angle sensor 109. In this case, the in-vehicle processing apparatus 120 estimates the movements of the vehicle 1 by using the images captured by the camera 102.

The in-vehicle processing apparatus 120 calculates a positional relationship between the subject and the camera 102 by using the internal parameters and the external parameters which are stored in the ROM 123. Then, the travel amount and the moving direction of the vehicle 1 are estimated by tracking the subject in the plurality of captured images.

(3) Point group information such as the parking facility point group 124A and the local peripheral information 122B may be stored as three-dimensional information. The three-dimensional point group information may be compared with other point groups in two dimensions in a manner similar to the first embodiment by projecting the three-dimensional point group information on a two-dimensional plane or may be compared with each other in three dimensions. In this case, the in-vehicle processing apparatus 120 can obtain three-dimensional point groups of landmarks as described below. Specifically speaking, the in-vehicle processing apparatus 120 can obtain the three-dimensional point groups of three-dimensional static objects by employing the publicly known motion stereo technology and information obtained by correcting its motion estimation part with an internal sensor and a positioning sensor by using the travel amount of the vehicle 1, which is calculated based on the outputs of the vehicle speed sensor 108 and the steering angle sensor 109, and the plurality of captured images which are output from the camera 102.

(4) In step S643 in Fig. 7, the in-vehicle processing apparatus 120 may proceed to step S644 if a negative judgment is obtained continuously for several times instead of proceeding to step S644 as a result of the negative judgment obtained only once.

(5) Instead of the judgment in step S645, the in-vehicle processing apparatus 120 may judge whether the proportion of points determined as outliers in the local peripheral information 122B is larger than a predetermined threshold value or not. If that proportion is larger than the threshold value, the processing proceeds to step S644; and if that proportion is equal to or smaller than the threshold value, the processing proceeds to step S650. Furthermore, the in-vehicle processing apparatus 120 may proceed to step S644 only when the above-mentioned proportion is large in addition to the judgment of step S643 in Fig. 7.

(6) The in-vehicle processing apparatus 120 may execute the processing of steps S644 and S646 in Fig. 7 in advance. Furthermore, the in-vehicle processing apparatus 120 may record the processing results in the storage unit 124.

(7) The in-vehicle processing apparatus 120 may receive an operating command from the user not only from the input device 110 provided in the vehicle 1, but also from the communication device 114. For example, as the portable terminal which the user carries communicates with the communication device 114 and the user operates the portable terminal, the in-vehicle processing apparatus 120 may perform the operation similar to that performed when the automatic parking button 110C is pressed. In this case, the in-vehicle processing apparatus 120 can perform the automatic parking not only when the user is inside the vehicle 1, but also after the user gets off the vehicle 1.

(8) The in-vehicle processing apparatus 120 may park the vehicle 1 not only at the parking position recorded in the parking facility point group 124A, but also at the position designated by the user. The designation of the parking position by the user is conducted, for example, by the in-vehicle processing apparatus 120 displaying candidates for the parking position on the display device 111 and by the user selecting any one of the candidate parking positions using the input device 110.

(9) The in-vehicle processing apparatus 120 may receive the parking facility point group 124A from the outside via the communication device 114 and transmit the created parking facility point group 124A to the outside via the communication device 114. Moreover, a receiver/sending to/from which the in-vehicle processing apparatus 120 transmits/receives the parking facility point group 124A may be another in-vehicle processing apparatus 120 mounted in another vehicle or an apparatus managed by an organization which manages the relevant parking facility.

(10) The automatic parking system 100 may include a portable terminal instead of the GPS receiver 107 and record identification information of a base state with which the portable terminal communicates, instead of the latitude and longitude. This is because the communication range of the base station is limited to several hundreds of meters; and, therefore, if the base station to perform communication is the same, there is a high possibility that it may be the same parking facility.

(11) The cyclic feature included in the parking facility data is not limited to the parking frames. For example, a plurality of straight lines constituting a crosswalk which is one of the road surface paint are also the cyclic feature. Moreover, if the parking facility data is configured of information of obstacles such walls, which is obtained by a laser radar or the like, pillars which are regularly aligned are also the cyclic feature.

(12) In the aforementioned embodiment, vehicles and humans that are mobile objects are not included in the landmarks; however, the mobile objects may be included in the landmarks. In that case, the landmarks which are the mobile objects and the landmark other than the mobile objects may be stored in an identifiable manner.

(13) The in-vehicle processing apparatus 120 may identify the detected landmarks in the recording phase and also record the identification result of each landmark in the parking facility point group 124A. For the identification of the landmarks, shape information and color information of the landmarks, which are obtained from the captured images, and also three-dimensional shape information of the landmarks by the publicly motion stereo technology are used. The landmarks are identified as, for example, the parking frames, the road surface paint other than the parking frames, curbstones, guardrails, or walls. Furthermore, the in-vehicle processing apparatus 120 may include vehicles and humans, that are mobile objects, in the landmarks and also record their identification results in the parking facility point group 124A in the same manner as other landmarks. In this case, the vehicles and the humans are collectively identified and recorded as the "mobile objects" or the vehicles and the humans may be identified and recorded individually.

(Second Embodiment)

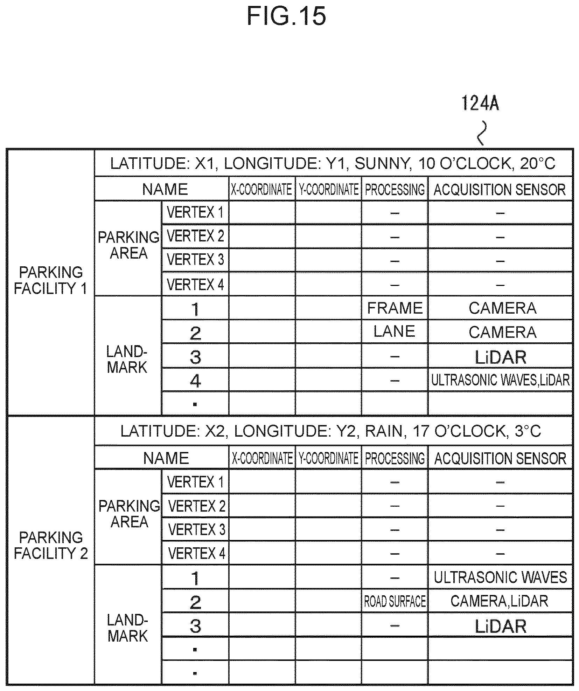

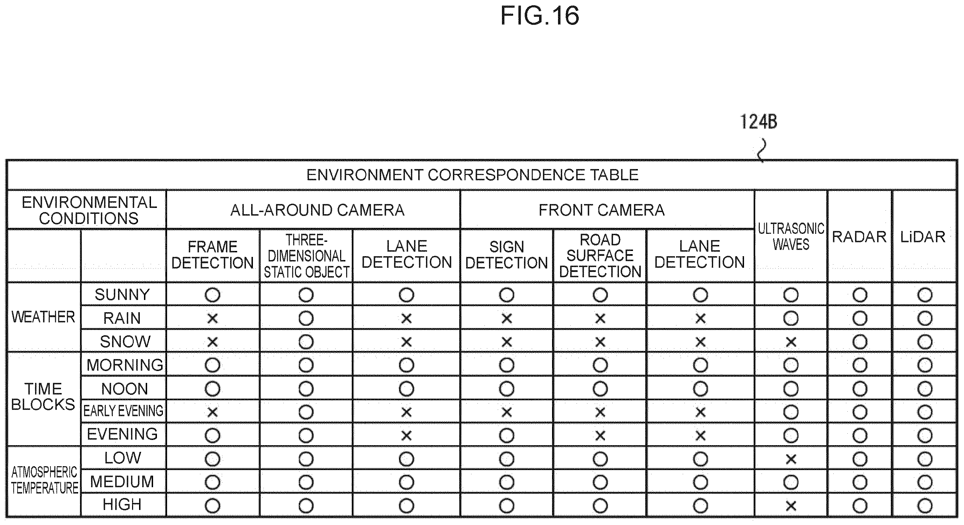

A second embodiment of the in-vehicle processing apparatus according to the present invention will be explained with reference to Fig. 15 and Fig. 16. In the following explanation, the same reference numerals as those in in the first embodiment are assigned to the same constituent elements as those in the first embodiment and the differences between them will be mainly explained. Matters which will not be particularly explained are the same as those in the first embodiment. The main difference between this embodiment and the first embodiment is that in this embodiment, not only the types of the sensors, but also methods for processing the outputs of the sensors are included in the environment correspondence table 124B.

(Configuration)

In this embodiment, a plurality of cameras 102 are mounted and capture images from different directions. By combining their outputs, an image which captures all the surroundings of the vehicle 1 can be created. In this embodiment, this will be referred to as an image(s) captured by an "all-around camera" for the sake of convenience. Furthermore, the camera 102 which captures images of an area ahead of the vehicle 1 will be referred to as a "front camera." The arithmetic operation unit 121 performs frame detection, three-dimensional static object detection, and lane detection by known means by using the images captured by the all-around camera. Furthermore, the arithmetic operation unit 121 performs sign detection, road surface detection, and lane detection by using images captured by the front camera.

The frame detection is a function that detects closed areas, such as the parking frames, which are drawn on the road surface. The three-dimensional static object detection is a function that detects three-dimensional static objects. The lane detection is a function that detects driving lanes defined by white lines and rivets. The sign detection is a function that detects traffic signs. The road surface detection is a function that detects the road surface where the vehicle 1 is driving. However, the sensor output processing methods which are listed here are just examples and the arithmetic operation unit 121 may execute whatever processing for using the sensor outputs.

Fig. 15 is a diagram illustrating an example of the parking facility point group 124A according to the second embodiment. In the second embodiment, a processing method for acquiring the feature points of the landmarks is also indicated in the parking facility point group 124A. Referring to Fig. 15, a "processing" column is added as the second column from the right as compared to the first embodiment and the processing method is indicated there.

Fig. 16 is a diagram illustrating an example of the environment correspondence table 124B according to the second embodiment. The environment correspondence table 124B indicates the relationship between the accuracy and the environmental conditions with respect to each sensor output processing method. For example, the three-dimensional static object detection is relatively more resistant to noise than other methods, so that it can secure the accuracy even under the environmental condition such as rain or snow; and in the example illustrated in Fig. 16, the ∘ mark is assigned even when the weather is rain or snow.

(Operation)

In the second embodiment, when performing the self-position estimation, feature points to be used are decided by also considering the sensor output processing method. Specifically speaking, in S631 in Fig. 6, the availability under the non-matching condition is judged with respect to each sensor and each sensor output processing method. Other processing is similar to that of the first embodiment.

According to the above-described second embodiment, the following advantageous effect can be obtained in addition to the operational advantages of the first embodiment. Specifically speaking, not only the outputs of the sensors, but also the sensor output processing methods are affected by the environmental conditions; and under specific conditions, an error(s) is included and the accuracy degrades. However, if the error(s) is likely to occur in the same manner as at the time of recording, it is possible to estimate the position by comparing both of them. Therefore, if the environmental conditions match each other, the position is estimated by using all pieces of point group data. On the other hand, if the environmental conditions are different, this means that the errors attributable to the sensor output processing methods are different; and, accordingly, there is a low possibility that they match each other, and there is rather a fear of impeding the position estimation. Therefore, it is possible to prevent erroneous estimation of the position by selecting the coordinates created by the processing method with high accuracy from the feature points of the recorded parking facility data.

(Variation of Second embodiment)

In the aforementioned second embodiment, only the output processing method for the camera 102 is included in the environment correspondence table 124B; however, a processing method for other sensors, that is, the sonar 103, the radar 104, and the LiDAR 105 may be included. Also, a processing method for a combination of outputs of a plurality of the sensors may be included in the environment correspondence table 124B.

The above-described respective embodiments and variations may be combined with each other. Various embodiments and variations have been described above; however, the present invention is not limited to the content of these embodiments and variations. Other aspects which can be thought of within the scope of the technical idea of the present invention are also included within the scope of the present invention.

The disclosure content of the following basic priority application is incorporated herein by reference: Japanese Patent Application No. 2018-160024 (filed on August 29, 2018).

REFERENCE SIGNS LIST

| | |
|---|---|
| 1: | vehicle |
| 100: | automatic parking system |
| 102: | camera |
| 103: | sonar |
| 104: | radar |
| 105: | LiDAR |
| 107: | GPS receiver |
| 108: | vehicle speed sensor |
| 109: | steering angle sensor |
| 120: | in-vehicle processing apparatus |
| 121: | arithmetic operation unit |
| 121A: | point group data acquisition unit |
| 121B: | local peripheral information creation unit |
| 121C: | position estimation unit |
| 121D: | current environment acquisition unit |
| 122A: | outlier list |
| 122B: | local peripheral information |
| 124: | storage unit |
| 124A: | parking facility point group |
| 124B: | environment correspondence table |
| 125: | interface |
| 130: | vehicle control apparatus |

## Claims

1. An in-vehicle processing apparatus comprising:

   a storage unit configured to store point group data, which is created based on output of a sensor for acquiring information about surroundings of a vehicle, including an environmental condition which is a condition for an ambient environment when the output of the sensor is acquired, and including a plurality of coordinates of points indicating parts of objects in a first coordinate system;
   a sensor input unit configured to acquire the output of the sensor;
   a current environment acquisition unit configured to acquire the environmental condition;
   a movement information acquisition unit configured to acquire information about movements of the vehicle;
   a local peripheral information creation unit configured to generate local peripheral information including a position of the vehicle in a second coordinate system and a plurality of coordinates of points indicating parts of objects in the second coordinate system on the basis of the information acquired by the sensor input unit and the movement information acquisition unit; and
   a position estimation unit configured to estimate a relationship between the first coordinate system and the second coordinate system on the basis of the point group data, the local peripheral information, the environmental condition included in the point group data, and the environmental condition acquired by the current environment acquisition unit and estimate the position of the vehicle in the first coordinate system.

2. The in-vehicle processing apparatus according to claim 1,
   wherein the environmental condition includes at least one of weather, a time block, and an atmospheric temperature.

3. The in-vehicle processing apparatus according to claim 1 or claim 2,
   wherein a type of the sensor used to create the coordinates is recorded, with respect to each of the coordinates, in the point group data; and
   wherein if the position estimation unit determines that the environmental condition included in the point group data matches the environmental condition acquired by the current environment acquisition unit, the position estimation unit estimates the relationship between the first coordinate system and the second coordinate system by using all the coordinates included in the point group data; and
   if the position estimation unit determines that the environmental condition included in the point group data does not match the environmental condition acquired by the current environment acquisition unit, the position estimation unit selects the coordinates in the first coordinate system to be used to estimate the relationship between the first coordinate system and the second coordinate system on the basis of the environmental condition included in the point group data and the type of the sensor.

4. The in-vehicle processing apparatus according to claim 3,
   wherein if the position estimation unit determines that the environmental condition included in the point group data does not match the environmental condition acquired by the current environment acquisition unit, the position estimation unit selects the coordinates created based on the output of the sensor of a high accuracy type under the environmental condition included in the point group data.

5. The in-vehicle processing apparatus according to any one of claims 1 to 4,
   wherein a method for processing the output of the sensor used to create the coordinates is recorded, with respect to each of the coordinates, in the point group data; and
   wherein if the position estimation unit determines that the environmental condition included in the point group data matches the environmental condition acquired by the current environment acquisition unit, the position estimation unit estimates the relationship between the first coordinate system and the second coordinate system by using all the coordinates included in the point group data; and
   if the position estimation unit determines that the environmental condition included in the point group data does not match the environmental condition acquired by the current environment acquisition unit, the position estimation unit selects the coordinates in the first coordinate system to be used to estimate the relationship between the first coordinate system and the second coordinate system on the basis of the environmental condition included in the point group data and the method for processing the output of the sensor.

6. The in-vehicle processing apparatus according to claim 5,
   wherein if the position estimation unit determines that the environmental condition included in the point group data does not match the environmental condition acquired by the current environment acquisition unit, the position estimation unit selects the coordinates created based on the processing method of a high accuracy type under the environmental condition included in the point group data.

# FIG.1

AUTOMATIC PARKING SYSTEM ~1

IN-VEHICLE PROCESSING APPARATUS ~120

STORAGE UNIT ~124

PARKING FACILITY POINT GROUP ~124A

ENVIRONMENT CORRESPON-DENCE TABLE ~124B

~100

RAM ~122

OUTLIER LIST ~122A

LOCAL PERIPHERAL INFORMATION ~122B

I/F ~125

ROM ~123

ARITHMETIC OPERATION UNIT ~121

POINT GROUP DATA ACQUISITION UNIT ~121A

LOCAL PERIPHERAL INFORMATION CREATION UNIT ~121B

POSITION ESTIMATION UNIT ~121C

CURRENT ENVIRONMENT ACQUISITION UNIT ~121D

102 — CAMERA

103 — SONAR

104 — RADAR

105 — LiDAR

107 — GPS RECEIVER

108 — VEHICLE SPEED SENSOR

109 — STEERING ANGLE SENSOR

DISPLAY DEVICE 111

COMMUNICATION DEVICE

VEHICLE CONTROL APPARATUS

114

130

131 — STEERING DEVICE

132 — DRIVING DEVICE

133 — CONTROL DEVICE

INPUT DEVICE ~110

RECORDING START BUTTON ~110A

RECORDING COMPLETION BUTTON ~110B

AUTOMATIC PARKING BUTTON ~110C

# FIG.2

124A

| PARKING FACILITY 1 | LATITUDE: X1, LONGITUDE: Y1, SUNNY, 10 O'CLOCK, 20°C | | | | |
| --- | --- | --- | --- | --- | --- |
| | NAME | | X-COORDINATE | Y-COORDINATE | ACQUISITION SENSOR |
| | PARKING AREA | VERTEX 1 | | | – |
| | | VERTEX 2 | | | – |
| | | VERTEX 3 | | | – |
| | | VERTEX 4 | | | – |
| | LANDMARK | 1 | | | CAMERA |
| | | 2 | | | CAMERA |
| | | 3 | | | LiDAR |
| | | 4 | | | ULTRASONIC WAVES,LiDAR |
| | | . | | | |
| PARKING FACILITY 2 | LATITUDE: X2, LONGITUDE: Y2, RAIN, 17 O'CLOCK, 3°C | | | | |
| | NAME | | X-COORDINATE | Y-COORDINATE | ACQUISITION SENSOR |
| | PARKING AREA | VERTEX 1 | | | – |
| | | VERTEX 2 | | | – |
| | | VERTEX 3 | | | – |
| | | VERTEX 4 | | | – |
| | LANDMARK | 1 | | | ULTRASONIC WAVES |
| | | 2 | | | CAMERA,LiDAR |
| | | 3 | | | LiDAR |
| | | . | | | |
| | | . | | | |

# FIG.3

124B

| ENVIRONMENT CORRESPONDENCE TABLE | | | | | |
|---|---|---|---|---|---|
| ENVIRONMENTAL CONDITIONS | | CAMERA | ULTRASONIC WAVES | RADAR | LiDAR |
| WEATHER | SUNNY | ○ | ○ | ○ | ○ |
| | RAIN | × | ○ | ○ | ○ |
| | SNOW | × | × | ○ | ○ |
| TIME BLOCKS | MORNING | ○ | ○ | ○ | ○ |
| | NOON | ○ | ○ | ○ | ○ |
| | EARLY EVENING | × | ○ | ○ | ○ |
| | EVENING | × | ○ | ○ | ○ |
| ATMOSPHERIC TEMPERATURE | LOW | ○ | × | ○ | ○ |
| | MEDIUM | ○ | ○ | ○ | ○ |
| | HIGH | ○ | × | ○ | ○ |

# FIG.4

START

**S501**
RECORDING START SWITCH IS PRESSED? — NO

YES
**S501A**
INITIALIZATION PROCESSING

**S502**
LANDMARK POSITIONING

**S503**
ESTIMATE AUTOMATIC TRAVEL AMOUNT AND UPDATE CURRENT POSITION

**S504**
TEMPORARILY RECORD POINT GROUP

**S505**
RECORDING COMPLETION SWITCH IS PRESSED? — NO

YES
**S505A**
RECORD PARKING POSITION AND ENVIRONMENTAL CONDITIONS

**S506**
PARKING FACILITY DATA WITH MATCHING POSITION AND ENVIRONMENTAL CONDITIONS IS RECORDED ? — NO / YES

YES
**S507**
PERFORM COORDINATE TRANSFORMATION WITH REFERENCE TO THE PARKING POSITION

**S507A**
CALCULATE POINT GROUP MATCHING RATE

**S508**
POINT GROUP MATCHING RATE > THRESHOLD VALUE? — NO

YES
**S509**
MERGE

**S510**
RECORD THE RELEVANT DATA AS NEW PARKING FACILITY POINT GROUP

END

## FIG.5

```
                    ┌─────────────────────────┐
                    │         START           │
                    └─────────────────────────┘
                                 │
                                 ▼
        S601      ┌─────────────────────────────┐
                  │      GPS POSITIONING         │
                  └─────────────────────────────┘
                                 │
                                 ▼
        S602          ╱────────────────────╲
                  ╱   ANY PARKING             ╲
              ╱    FACILITY POINT GROUP          ╲
          ╱   WITH SUBSTANTIALLY MATCHING          ╲     NO
          ╲     LATITUDE AND LONGITUDE            ╱─────────
              ╲      IS RECORDED?             ╱
                  ╲────────────────────╱
                                 │ YES
        S603                     ▼
                  ┌─────────────────────────────┐
                  │      IDENTIFY PARKING        │
                  │   FACILITY POINT GROUP       │
                  └─────────────────────────────┘
        S603A                    │
                  ┌─────────────────────────────┐
                  │       INITIALIZATION         │
                  │        PROCESSING            │
                  └─────────────────────────────┘
        S604                     │
                  ┌┬───────────────────────────┬┐
                  ││     SELF-POSITION          ││
                  ││      ESTIMATION            ││
                  ││       (FIG. 6)             ││
                  └┴───────────────────────────┴┘
                                 │
        S605                     ▼
                      ╱────────────────────╲
                  ╱      SELF-POSITION         ╲       NO
                  ╲   HAS BEEN SUCCESSFULLY    ╱─────────
                      ╲     ESTIMATED?      ╱
                          ╲──────────╱
                                 │ YES
        S606                     ▼
                  ┌─────────────────────────────┐
                  │  DISPLAY THAT AUTOMATIC      │
                  │   PARKING IS POSSIBLE        │
                  └─────────────────────────────┘
                                 │
                                 ▼
        S607          ╱────────────────────╲
                  ╱      AUTOMATIC            ╲      NO
                  ╲   PARKING SWITCH IS       ╱─────────
                      ╲    PRESSED?        ╱
                          ╲──────────╱
                                 │ YES
        S608                     ▼
                  ┌┬───────────────────────────┬┐
                  ││      AUTOMATIC             ││
                  ││   PARKING (FIG. 8)         ││
                  └┴───────────────────────────┴┘
                                 │
                                 ▼
                    ┌─────────────────────────┐
                    │          END            │
                    └─────────────────────────┘
```

# FIG.6

```
        ┌──────────────────────────┐
        │  SELF-POSITION ESTIMATION │
        │          START            │
        └──────────────────────────┘
                     │
      S621           ▼
        ┌──────────────────────────┐
        │   LANDMARK POSITIONING    │
        └──────────────────────────┘
                     │
      S622           ▼
        ┌──────────────────────────────┐
        │ ESTIMATE AUTOMATIC TRAVEL AMOUNT │
        │ AND UPDATE CURRENT POSITION OF   │
        │ RECORDED COORDINATE SYSTEM       │
        └──────────────────────────────┘
```

S621 — LANDMARK POSITIONING

S622 — ESTIMATE AUTOMATIC TRAVEL AMOUNT AND UPDATE CURRENT POSITION OF RECORDED COORDINATE SYSTEM

S623 — UPDATE LOCAL PERIPHERAL INFORMATION

S624 — ACQUIRE ENVIRONMENTAL CONDITIONS

S625 — ANY PARKING FACILITY POINT GROUP WITH MATCHING ENVIRONMENTAL CONDITIONS IS RECORDED ?

YES

S626 — USE ALL FEATURE POINTS OF PARKING FACILITY POINT GROUP WITH MATCHING ENVIRONMENTAL CONDITIONS

NO

S630 — IDENTIFY NON-MATCHING CONDITION

S631 — JUDGE AVAILABILITY OF EACH SENSOR UNDER NON-MATCHING CONDITION

S632 — EXTRACT AVAILABLE FEATURE POINTS

S633 — USE FEATURE POINTS OF PARKING FACILITY POINT GROUP WITH THE LARGEST NUMBER OF AVAILABLE FEATURE POINTS

S627 — MATCHING BETWEEN PARKING FACILITY POINT GROUP AND LOCAL PERIPHERAL INFORMATION (FIG. 7)

S628 — CALCULATE POSITION OF PARKING FACILITY COORDINATE SYSTEM

S629 — SELF-DIAGNOSIS

RETURN

# FIG.7

```
        ┌─────────────────────┐
        │      MATCHING        │
        │       START          │
        └─────────────────────┘
                  │
  S641            ▼
        ┌─────────────────────┐
        │  APPLY OUTLIER LIST  │
        └─────────────────────┘
                  │
  S641A           ▼
        ┌─────────────────────────────┐
        │ TRANSFORM THE LATEST LANDMARK│
        │ POSITIONING RESULT TO PARKING│
        │ FACILITY COORDINATE SYSTEM   │
        └─────────────────────────────┘
                  │
  S642            ▼
        ┌─────────────────────────┐
        │ CALCULATE INSTANTANEOUS  │
        │    MATCHING DEGREE       │
        └─────────────────────────┘
                  │
  S643            ▼
              ╱INSTANTANEOUS╲          NO
   YES      ╱ MATCHING DEGREE >╲──────────────┐
   ┌───────╲   THRESHOLD      ╱               │
   │         ╲   VALUE?      ╱      S644       ▼
   │           ╲          ╱        ┌──────────────────────┐
   │                               │ DETECT CYCLIC FEATURE │
   │                               └──────────────────────┘
   │                                         │
   │                              S645        ▼
   │                       NO        ╱ CYCLIC  ╲
   │                    ◄───────────╱ FEATURE HAS BEEN ╲
   │                                ╲  DETECTED?    ╱
   │                                   ╲        ╱
   │                                       │ YES
   │  S650                       S646       ▼
   │  ┌──────────────────┐       ┌──────────────────────┐
   │  │ASSOCIATE POINT   │       │   CALCULATE CYCLE     │
   │  │GROUPS WITH EACH  │       └──────────────────────┘
   │  │OTHER             │                  │
   │  └──────────────────┘       S647        ▼
   │         │                   ┌─────────────────────────────┐
   │  S651   ▼                   │ CALCULATE OVERALL MATCHING   │
   │  ┌──────────────────┐       │ DEGREE BY CAUSING MOVEMENTS  │
   │  │  MINIMIZE ERROR  │       │ FOR INTEGRAL MULTIPLES OF    │
   │  └──────────────────┘       │ THE CYCLE                    │
   │         │                   └─────────────────────────────┘
   │  S652   ▼                   S648        │
   │       ╱ ERROR HAS ╲         ┌─────────────────────────────┐
   │ NO   ╱ CONVERGED?  ╲        │ RECORD COORDINATE            │
   └─────╲             ╱         │ TRANSFORMATION FORMULA WHICH │
          ╲         ╱            │ MAKES OVERALL MATCHING       │
             │ YES              │ DEGREE BECOME MAXIMUM        │
   S653      ▼                   └─────────────────────────────┘
   ┌──────────────────┐
   │ RECORD COORDINATE│
   │ TRANSFORMATION   │
   │ FORMULA          │
   └──────────────────┘
          │
   S654   ▼
   ┌──────────────────┐
   │ UPDATE OUTLIER   │
   │ LIST             │
   └──────────────────┘
          │
          ▼
   ┌──────────────────┐
   │     RETURN       │
   └──────────────────┘
```

# FIG.8

AUTOMATIC PARKING
START

S661
SELF-POSITION
ESTIMATION

S662
GENERATE ROUTE TO
PARKING POSITION

S663
VEHICLE CONTROL

S664
SELF-POSITION
ESTIMATION

S665
ARRIVE
AT PARKING
POSITION?

NO

YES

RETURN

# FIG.9

901

903

902

1

（a）

RECORDED
——— UNRECORDED

903

901

Y

X

（b）

# FIG.10

RECORDED

--- UNRECORDED

901

Y
X

（a）

901

Y
X

（b）

# FIG.11

901

903

902

- - - LOCAL PERIPHERAL INFORMATION

1

# FIG.12

1

FIG.13

PARKING FACILITY POINT GROUP
LOCAL PERIPHERAL INFORMATION

# FIG.14

—— PARKING FACILITY POINT GROUP

--- LOCAL PERIPHERAL INFORMATION

( a )

( b )

( c )

# FIG.15

124A

| PARKING FACILITY 1 | LATITUDE: X1, LONGITUDE: Y1, SUNNY, 10 O'CLOCK, 20°C | | | | | |
| | NAME | | X-COORDINATE | Y-COORDINATE | PROCESSING | ACQUISITION SENSOR |
| | PARKING AREA | VERTEX 1 | | | – | – |
| | | VERTEX 2 | | | – | – |
| | | VERTEX 3 | | | – | – |
| | | VERTEX 4 | | | – | – |
| | LAND-MARK | 1 | | | FRAME | CAMERA |
| | | 2 | | | LANE | CAMERA |
| | | 3 | | | – | LiDAR |
| | | 4 | | | – | ULTRASONIC WAVES,LiDAR |
| | | . | | | | |
| PARKING FACILITY 2 | LATITUDE: X2, LONGITUDE: Y2, RAIN, 17 O'CLOCK, 3°C | | | | | |
| | NAME | | X-COORDINATE | Y-COORDINATE | PROCESSING | ACQUISITION SENSOR |
| | PARKING AREA | VERTEX 1 | | | – | – |
| | | VERTEX 2 | | | – | – |
| | | VERTEX 3 | | | – | – |
| | | VERTEX 4 | | | – | – |
| | LAND-MARK | 1 | | | – | ULTRASONIC WAVES |
| | | 2 | | | ROAD SURFACE | CAMERA,LiDAR |
| | | 3 | | | – | LiDAR |
| | | . | | | | |
| | | . | | | | |

# FIG.16

124B

| ENVIRONMENT CORRESPONDENCE TABLE | | | | | | | | | |
|---|---|---|---|---|---|---|---|---|---|
| ENVIRONMENTAL CONDITIONS | | ALL-AROUND CAMERA | | | FRONT CAMERA | | | ULTRASONIC WAVES | RADAR | LiDAR |
| | | FRAME DETECTION | THREE-DIMENSIONAL STATIC OBJECT | LANE DETECTION | SIGN DETECTION | ROAD SURFACE DETECTION | LANE DETECTION | | | |
| WEATHER | SUNNY | ○ | ○ | ○ | ○ | ○ | ○ | ○ | ○ | ○ |
| | RAIN | × | ○ | × | × | × | × | ○ | ○ | ○ |
| | SNOW | × | ○ | × | × | × | × | × | ○ | ○ |
| TIME BLOCKS | MORNING | ○ | ○ | ○ | ○ | ○ | ○ | ○ | ○ | ○ |
| | NOON | ○ | ○ | ○ | ○ | ○ | ○ | ○ | ○ | ○ |
| | EARLY EVENING | × | ○ | × | × | × | × | ○ | ○ | ○ |
| | EVENING | ○ | ○ | × | ○ | × | × | ○ | ○ | ○ |
| ATMOSPHERIC TEMPERATURE | LOW | ○ | ○ | ○ | ○ | ○ | ○ | × | ○ | ○ |
| | MEDIUM | ○ | ○ | ○ | ○ | ○ | ○ | ○ | ○ | ○ |
| | HIGH | ○ | ○ | ○ | ○ | ○ | ○ | × | ○ | ○ |

## INTERNATIONAL SEARCH REPORT

| International application No. |
|---|
| PCT/JP2019/009071 |

**A. CLASSIFICATION OF SUBJECT MATTER**

Int.Cl.    B60W30/06(2006.01)i,  B60R99/00(2009.01)i,  G01C21/28(2006.01)i,
G08G1/16(2006.01)n

According to International Patent Classification (IPC) or to both national classification and IPC

**B. FIELDS SEARCHED**

Minimum documentation searched (classification system followed by classification symbols)
Int.Cl. B60W30/06, B60R99/00, G01C21/28, G08G1/16

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2018-4343 A (CLARION CO., LTD.) 11 January 2018, paragraphs [0010]–[0014], [0021], [0023], [0029], [0034]–[0043], [0049]–[0062], [0099]–[0100], [0118], fig. 1-3, 5-6, 14 & WO 2018/003406 A1 & CN 109313031 A | 1–2<br>3–6 |
| Y | JP 2006-195641 A (NISSAN MOTOR CO., LTD.) 27 July 2006, paragraph [0078] (Family: none) | 1–2 |
| A | JP 2018-112506 A (CLARION CO., LTD.) 19 July 2018 & WO 2018/131258 A1 | 1–6 |
| A | JP 2010-151619 A (EQUOS RESEARCH CO., LTD.) 08 July 2010 (Family: none) | 1–6 |

☐  Further documents are listed in the continuation of Box C.       ☐  See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 21 May 2019 (21.05.2019) | 04 June 2019 (04.06.2019) |

| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |
|---|---|

Form PCT/ISA/210 (second sheet) (January 2015)

**REFERENCES CITED IN THE DESCRIPTION**

**Patent documents cited in the description**

- JP 2018004343 A
- JP 2018160024 A